(19) Europäisches Patentamt
European Patent Office
Office européen des brevets

(11) **EP 4 425 148 A1**

(12) **EUROPEAN PATENT APPLICATION**
published in accordance with Art. 153(4) EPC

(43) Date of publication:
**04.09.2024  Bulletin 2024/36**

(21) Application number: **22886756.0**

(22) Date of filing: **17.10.2022**

(51) International Patent Classification (IPC):
**G01N 15/14** *(2024.01)*     **G01N 37/00** *(2006.01)*

(52) Cooperative Patent Classification (CPC):
**G01N 15/14; G01N 37/00**

(86) International application number:
**PCT/JP2022/038559**

(87) International publication number:
**WO 2023/074428 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.10.2021   JP 2021177246**

(71) Applicant: **Sony Group Corporation
Tokyo 108-0075 (JP)**

(72) Inventors:
• **TASHIRO Shinji
  Tokyo 108-0075 (JP)**
• **YANASHITA Yudai
  Tokyo 108-0075 (JP)**

(74) Representative: **D Young & Co LLP
3 Noble Street
London EC2V 7BQ (GB)**

(54)   **BIOLOGICAL PARTICLE ISOLATING DEVICE AND PROGRAM**

(57)   An object of the present disclosure is to provide a biological particle sorting device capable of adjusting a sorting condition so as to obtain a sorting result desired by a user.

The present disclosure provides a biological particle sorting device including a sorting unit that sorts a sorting target particle on the basis of light generated by irradiating a biological particle flowing through a flow channel with light, in which the biological particle sorting device is configured to execute a sorting process on the basis of a sorting condition of a sorting target particle and a sorting mode selected from among a plurality of sorting modes, and the plurality of sorting modes includes at least a parameter adjustable mode in which a sorting process is executed on the basis of a target sorting parameter input by a user.

FIG. 1

EP 4 425 148 A1

**Description**

TECHNICAL FIELD

The present disclosure relates to a biological particle sorting device and a program. More specifically, the present disclosure relates to a biological particle sorting device configured to allow a user to set a sorting condition, and a program for causing the biological particle sorting device to execute a sorting process.

BACKGROUND ART

For example, a particle population such as cells, microorganisms, and liposomes is labeled with a fluorescent dye, and the intensity and/or pattern of fluorescence generated from the fluorescent dye excited by irradiating each particle of the particle population with laser light is measured, thereby measuring the characteristics of the particles. As a representative example of the biological sample analyzer that performs the measurement, a flow cytometer can be mentioned.

The flow cytometer is a device that irradiates particles flowing in a line in a flow channel with laser light (excitation light) having a specific wavelength and detects fluorescence and/or scattered light emitted from each particle to analyze a plurality of particles one by one. The flow cytometer can convert light detected by the photodetector into an electrical signal, quantify the electrical signal, and perform statistical analysis to determine characteristics, for example, the type, size, structure, and the like of each particle. Particles having desired characteristics can also be sorted on the basis of the result of the determination.

Several techniques related to adjustment of particle sorting conditions have been proposed so far. For example, Patent Document 1 below discloses a particle sorting device for sorting a particle flowing through a flow channel, the particle sorting device including a light detection unit that detects optical information obtained from a sample liquid, a sorting unit that sorts a particle from the sample liquid on the basis of detected optical information, and a sorting control unit that adjusts a parameter for determination of a sorting condition, on the basis of at least one of information regarding a target degree of purity or information regarding a target yield, of a target particle in acquired particles (claim 7).

CITATION LIST

PATENT DOCUMENT

Patent Document 1: WO 2021/090573

SUMMARY OF THE INVENTION

PROBLEMS TO BE SOLVED BY THE INVENTION

For example, the user who performs the sorting process of the biological particle may desire to recover as many sorting target particles as possible, or may desire to increase the purity of the sorting target particles as much as possible. Alternatively, the user may wish to recover as many sorting target particles as possible while ensuring a certain degree of purity. Furthermore, the user may desire to adjust the number of particles to be subjected to a sorting determination process per unit time, for example, to adjust the time needed for the sorting process. Thus, it is desirable that the biological particle sorting device can adjust the sorting condition according to the user's needs.

An object of the present disclosure is to provide a biological particle sorting device capable of adjusting a sorting condition so as to obtain a sorting result desired by a user.

SOLUTIONS TO PROBLEMS

The present disclosure provides

a biological particle sorting device, including
a sorting unit that sorts a sorting target particle on the basis of light generated by irradiating a biological particle flowing through a flow channel with light, in which
the biological particle sorting device is configured to execute a sorting process on the basis of a sorting condition of a sorting target particle and a sorting mode selected from among a plurality of sorting modes, and
the plurality of sorting modes includes at least a parameter adjustable mode in which a sorting process is executed on the basis of a target sorting parameter input by a user. The plurality of sorting modes may include at least

a purity mode in which a sorting process is executed in such a manner that purity of sorting target particles becomes a predetermined target value,
a yield mode in which a sorting process is executed in such a manner that a yield of sorting target particles becomes a predetermined target value, and
the parameter adjustable mode.

The biological particle sorting device may be configured to receive, as the target sorting parameter, an input of at least one of a parameter related to a sorting result of sorting target particles or a parameter related to a flow amount of biological particles.

The parameter related to the sorting result may include purity of sorting target particles, sorting efficiency of sorting target particles, or both of the purity of sorting target particles and the sorting efficiency.

The parameter related to the flow amount of the biological particle may include a detection frequency of biological particles subjected to sorting determination, a flow amount of a sample flowing through the flow channel, or both of the detection frequency and the flow amount.

The sorting condition may include gate information.

The sorting condition may further include a preset purity condition or sorting efficiency condition.

In the parameter adjustable mode, the biological particle sorting device may be further configured to execute

a first sorting process of sorting a biological particle according to a preset sorting condition, and
a second sorting process based on data related to a result of the first sorting process and a target sorting parameter input by a user.

Data related to a result of the first sorting process may include profile data related to a relationship between a sorting operation execution timing and a sorting success rate.

The biological particle sorting device may be configured to execute approximation processing of the profile data.

The biological particle sorting device can execute the approximation processing on the basis of a preset sorting success rate and a sorting operation execution timing corresponding to the preset sorting success rate.

The biological particle sorting device can

derive an approximate model of the relationship between the sorting operation execution timing and the sorting success rate by the approximation processing, and
adjust a sorting condition in the second sorting process on the basis of the approximate model and a target sorting parameter input by a user.

The biological particle sorting device may hold in advance data indicating a correspondence relationship between a sorting success rate and a sorting parameter, and

the biological particle sorting device may
specify a sorting success rate corresponding to the target sorting parameter input by the user by referring to the data indicating the correspondence relationship, and
adjust a sorting condition in the second sorting process on the basis of the specified sorting success rate and the approximate model.

The biological particle sorting device can set a guard time in the second sorting process in adjustment of a sorting condition in the second sorting process.

The biological particle sorting device can adjust one or more sorting parameters on the basis of the set guard time in the adjustment of the sorting condition in the second sorting process.

The biological particle sorting device may be configured to be capable of displaying a parameter reception screen that receives an input of a target sorting parameter.

The biological particle sorting device may be configured to be capable of displaying a processing condition setting screen that receives an input of gate information for specifying a sorting target particle, and
the biological particle sorting device can display a parameter reception screen in response to selection of a predetermined button in the processing condition setting screen.

The biological particle sorting device can display the parameter reception screen in response to selection of a predetermined button while the first sorting process is being executed or after the first sorting process is completed.

The biological particle sorting device may have a first display mode in which an input of operation control data related to a biological particle sorting process is received, and a second display mode in which a processing execution operation screen is displayed. The biological particle sorting device may be configured to be capable of receiving an input of a target sorting parameter in any one or both of the first display mode and the second display mode.

The present disclosure also provides a program for causing a biological particle sorting device to execute a sorting process based on a sorting condition of a sorting target particle and a sorting mode selected from among a plurality of sorting modes including at least a parameter adjustable mode in which a sorting process is executed on the basis of a target sorting parameter input by a user.

BRIEF DESCRIPTION OF DRAWINGS

Fig. 1 is a diagram illustrating an example configuration of a biological particle sorting device of the present disclosure.

Fig. 2 is a diagram illustrating an example configuration of the biological particle sorting device of the present disclosure.

Fig. 3 is an example of a flowchart of a sorting process executed by the biological particle sorting device of the present disclosure.

Fig. 4 is a diagram illustrating an example configuration of an information processing unit.

Fig. 5 is an enlarged view of a particle sorting unit.

Fig. 6 is a schematic perspective view of the vicinity of a connection flow channel.

Fig. 7 is a schematic cross-sectional view of the vicinity of the connection flow channel.

Fig. 8 is a schematic view illustrating a state in which a pressure change element is attached.

Fig. 9 is a diagram for explaining a guard time, and is a schematic view illustrating that biological particles P1 to P5 flow in a line in a flow direction FD.

Fig. 10 illustrates an example of a graph illustrating a relationship between delay time and a sorting success rate.

Fig. 11A illustrates an example of a graph illustrating a relationship between purity and a sorting success rate.

Fig. 11B is an example of a table illustrating the relationship between the purity and the sorting success rate.

Fig. 12 is a diagram illustrating an example of a state in which the biological particle sorting device according to the present disclosure is operated.

Fig. 13 is a diagram illustrating an example of a screen displayed by the biological particle sorting device according to the present disclosure.

Fig. 14 is a diagram illustrating an example of a screen displayed by the biological particle sorting device according to the present disclosure.

Fig. 15 is a diagram illustrating an example of a screen displayed by the biological particle sorting device according to the present disclosure.

Fig. 16 is a diagram illustrating an example of a screen displayed by the biological particle sorting device according to the present disclosure.

Fig. 17 is a diagram illustrating an example of a screen displayed by the biological particle sorting device according to the present disclosure.

Fig. 18 is a diagram illustrating an example of a screen displayed by the biological particle sorting device according to the present disclosure.

Fig. 19A is a diagram illustrating an example of a sorting mode selection screen.

Fig. 19B is a diagram illustrating an example of the sorting mode selection screen.

Fig. 19C is a diagram illustrating an example of the sorting mode selection screen.

Fig. 19D is a diagram illustrating an example of the sorting mode selection screen.

Fig. 19E is a diagram illustrating an example of the sorting mode selection screen.

Fig. 19F is a diagram illustrating an example of the sorting mode selection screen.

Fig. 19G is a diagram illustrating an example of the sorting mode selection screen.

Fig. 19H is a diagram illustrating an example of the sorting mode selection screen.

Fig. 20 is an example of a flowchart of a sorting process in a parameter adjustable mode.

Fig. 21 is a diagram for explaining an example of approximation processing.

Fig. 22 is a diagram for describing an example of guard time setting using an approximate model.

Fig. 23 is an example of a graph illustrating a relationship between a detection frequency and a sorting efficiency.

Fig. 24 is an example of a flowchart of processing in a first display mode.

Fig. 25 is an example of a flowchart of processing in a second display mode.

Fig. 26A is a diagram illustrating an example of a screen displaying a pre-sorting result.

Fig. 26B is a diagram illustrating an example of a screen displaying a pre-sorting result.

Fig. 26C is a diagram illustrating an example of a screen displaying a pre-sorting result.

Fig. 26D is a diagram illustrating an example of a screen displaying a pre-sorting result.

Fig. 27 is a schematic diagram illustrating a state in which a plurality of kinds of sorting target particles are sorted.

MODE FOR CARRYING OUT THE INVENTION

Hereinafter, preferred modes for carrying out the present disclosure will be described. Note that embodiments described below illustrate representative embodiments of the present disclosure, and the scope of the present disclosure is not limited only to these embodiments. Note that the present disclosure will be described in the following order.

1. First embodiment (biological particle sorting device)

    (1) Description of present disclosure
    (2) Example configuration of device
    (3) Example configuration of chip
    (4) Guard time
    (5) Example of sorting operation

        (5-1) Example of screen displayed in sorting operation
        (5-2) Example of setting of sorting condition for sorting process
        (5-2-1) Gate setting step S11
        (5-2-2) Sorting mode selection step S12
        (5-2-3) Sorting step S13
        (5-2-3-1) Sorting process in case where parameter adjustable mode is selected
        (5-2-3-2) Sorting process in case where purity mode is selected
        (5-2-3-3) Sorting process in case where yield mode is selected
        (5-2-3-4) Change of sorting parameter at any timing during sorting step
        (5-2-3-5) Sorting process of plurality of kinds of sorting target particles

    (6) Example of sorting operation flow

        (6-1) Example of processing in first display mode
        (6-2) Example of processing in second display mode

2. Second embodiment (biological particle sorting method)
3. Third embodiment (program)

1. First embodiment (biological particle analyzing device)

(1) Description of present disclosure

The biological particle sorting device of the present disclosure is configured to execute a sorting process on the basis of a sorting condition of a sorting target particle and a sorting mode selected from among a plurality of sorting modes, and the plurality of sorting modes includes at least a parameter adjustable mode in which the sorting process is executed on the basis of a target sorting parameter input by a user. Since the biological particle sorting device is configured to execute the sorting process on the basis of the sorting condition of the sorting target particles and the selected sorting mode, the biological particle sorting device can execute the sorting process according to the user's needs. Moreover, the plurality of sorting modes includes a parameter adjustable mode, and in the parameter adjustment mode, a sorting process based on the target sorting parameter is executed. Thus, it is possible to execute the sorting process according to more detailed needs of the user.

The biological particle sorting device of the present disclosure may include a sorting unit that sorts sorting target particles on the basis of light generated by irradiating a biological particle flowing through a flow channel with light. An example configuration of the biological particle sorting device including the sorting unit will be described later.

In one embodiment, the biological particle sorting device of the present disclosure includes, as the plurality of sorting modes, at least a purity mode in which a sorting process is executed in such a manner that purity of sorting target particles achieves a predetermined target value (target purity), a yield mode in which a sorting process is executed in such a manner that a yield of sorting target particles achieves a predetermined target value (target yield), and the parameter adjustable mode. It is preferable to have these three sorting modes in order to meet various needs of the user regarding the sorting process.

In the purity mode, the biological particle sorting device may adjust other sorting conditions so that a set purity is achieved. That is, the purity mode can also be said to be a sorting mode in which purity is prioritized. Note that, in the purity mode, it is not necessary to achieve that the purity matches the target value itself, and it is sufficient if the sorting process is executed so that the purity approaches the target value.

In the yield mode, the biological particle sorting device may adjust other sorting conditions so that a set yield is achieved. That is, the yield mode can also be said to be a sorting mode in which yield is prioritized. Note that, in the yield mode, it is not necessary to achieve that the yield matches the target value itself, and it is sufficient if the sorting process is executed so that the yield approaches the target value.

The target sorting parameter that can be input by the user in the parameter adjustable mode may include a parameter related to a sorting result of the sorting target particle, a parameter related to a flow amount of the biological particle, or both of them. That is, the biological particle sorting device may be configured to receive inputs of these target sorting parameters. These target sorting parameters are particularly preferable in order to meet the needs of the user who performs the sorting process. These target sorting parameters can meet various needs of the user.

Hereinafter, first, an example configuration of a biological particle sorting device according to the present disclosure and an example configuration of a chip used for sorting will be described. The biological particle sorting device according to the present disclosure may be configured as, for example, a biological sample analyzer described in the following (2), that is, may have components (a light irradiation unit, a detection unit, an information processing unit, and a sorting unit) included in the biological sample analyzer. In addition, the biological particle sorting device according to the present disclosure may be configured to execute a sorting process using, for example, a chip described in the following (3).

Then, the processing executed by the biological particle sorting device will be described in (4) and the following.

(2) Example configuration of device

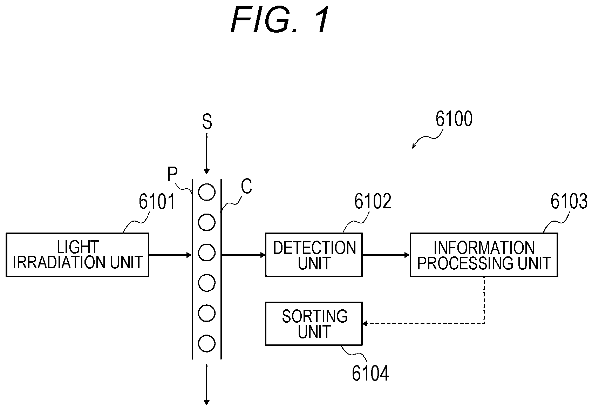

Fig. 1 shows an example configuration of a biological sample analyzer of the present disclosure. A biological sample analyzer 6100 shown in Fig. 1 includes: a light irradiation unit 6101 that irradiates a biological sample S flowing in a flow channel C with light; a detection unit 6102 that detects light generated by irradiating the biological sample S with light; and an information processing unit 6103 that processes information about the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

(Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

(Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 um and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

(Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

(Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

(Information Processing Unit)

The information processing unit 6103 includes a processing unit that performs processing of various kinds of data (light data, for example), and a storage unit that stores various kinds of data, for example. In a case where the processing unit acquires the light data corresponding to a fluorescent dye from the detection unit 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye. The fluorescence separation process may be performed by an unmixing method disclosed in JP 2011-232259 A, for example. In a case where the detection unit 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating process on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

(Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

(3) Example configuration of chip

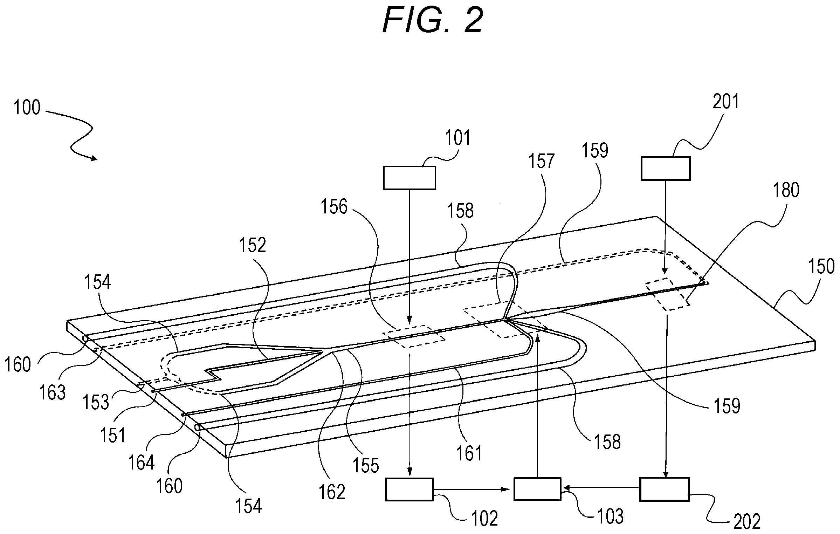

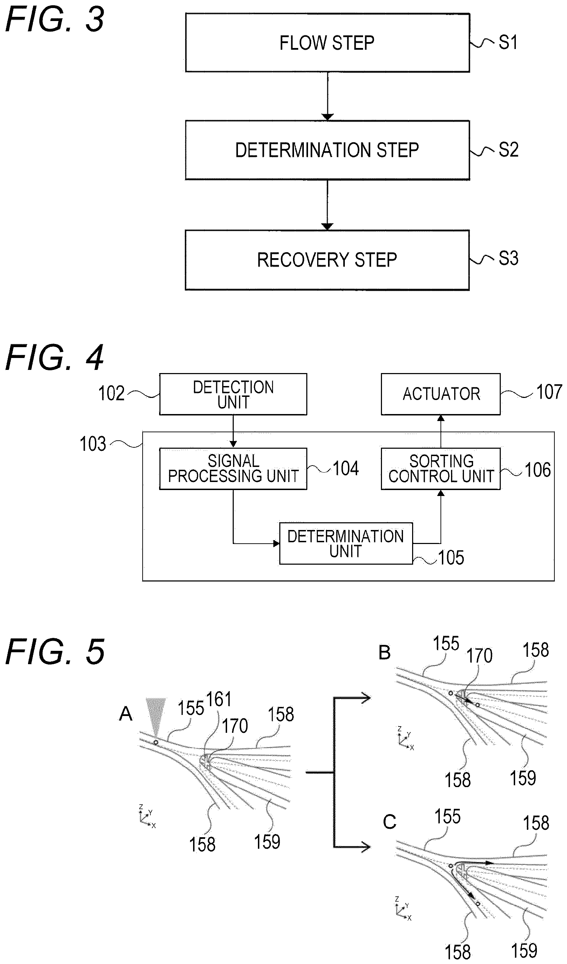

The biological particle sorting device according to the present disclosure may be configured as, for example, a device that sorts biological particles by controlling a flow channel through which the biological particles travel, and may be particularly configured as a device that sorts biological particles in a closed space. Fig. 2 illustrates an example configuration of the biological particle sorting device. The drawing also illustrates an example of a flow channel structure of a biological particle sorting microchip (hereinafter also referred to as a "chip") attached to the device. Fig. 3 illustrates an example of a flowchart of a sorting process executed by the biological particle sorting device.

A biological particle sorting device 100 illustrated in Fig. 2 includes a first light irradiation unit 101, a first detection unit 102, and an information processing unit 103. The first light irradiation unit 101, the first detection unit 102, and the information processing unit 103 are the light irradiation unit 6101, the detection unit 6102, and the information processing unit 6103 described above, and the description is also applied to the same drawing. As illustrated in Fig. 4, the information processing unit 103 can include a signal processing unit 104, a determination unit 105, and a sorting control unit 106.

Moreover, the biological particle sorting device 100 includes a second light irradiation unit 201 and a second detection unit 202, and the descriptions of the light irradiation unit 6101 and the detection unit 6102, which are described above, also apply to these. Note that specific configurations of the second light irradiation unit 201 and the second detection unit 202 may be different from those of the first light irradiation unit 101 and the first detection unit 102, respectively. The data acquired by the second light irradiation unit 201 and the second detection unit 202 may be different from the data acquired by the first light irradiation unit 101 and the first detection unit 102.

The biological particle sorting device 100 further includes a chip 150. The chip 150 may be included as a component of the sorting unit 6104 described above. The chip 150 may be attached to the biological particle sorting device 100 in an exchangeable manner.

Hereinafter, first, the biological particle sorting microchip 150 will be described, and next, the sorting operation by the biological particle sorting device 100 will be described.

The biological particle sorting microchip 150 illustrated in Fig. 2 includes a sample liquid flow channel 152 and a sheath liquid flow channel 154 that joins the sample liquid flow channel 152 at a junction 162. The biological particle sorting microchip 150 further include a sample liquid inlet 151 and a sheath liquid inlet 153.

Note that, in Fig. 2, a part of the sheath liquid flow channel 154 is indicated by a dotted line. The part indicated by the dotted line is located at a position lower than that of the sample liquid flow channel 152 indicated by a solid line (position displaced in an optical axis direction as indicated by an arrow extending from reference sign 101 to reference sign 102), and the flow channels do not communicate with each other at a position where the flow channel indicated by the dotted line intersects the flow channel indicated by the solid line. Furthermore, in the drawing, the sample liquid flow channel 152 is illustrated to bend twice between the sample liquid inlet 151 and the junction 162, which makes it easy to distinguish between the sample liquid flow channel 152 and the sheath liquid flow channel 154. The sample liquid flow channel 152 may be formed linearly without bending in this manner between the sample liquid inlet 151 and the junction 162.

In the biological particle sorting operation, a sample liquid containing biological particles is introduced from the sample liquid inlet 151 into the sample liquid flow channel 152, and a sheath liquid not including the biological particles is introduced from the sheath liquid inlet 153 into the sheath liquid flow channel 154.

The biological particle sorting microchip 150 includes a joined flow channel 155 including the junction 162 on one end thereof. The joined flow channel 155 includes a sorting discrimination unit 156 (hereinafter, also referred to as a "first detection region 156") used to perform sorting determination of biological particles.

In the biological particle sorting operation, the sample liquid and the sheath liquid merge at the junction 162, and then flow through the joined flow channel 155 toward a particle sorting unit 157. Especially, the sample liquid and the sheath liquid join at the junction 162 to form, for example, a laminar flow in which the sample liquid is surrounded by the sheath liquid. Preferably, in the laminar flow, the biological particles are arrayed substantially in a line. Due to the flow channel structure in which the sample liquid flow channel 152 and two sheath liquid flow channels 154 join at the junction 162, the flow channel structure including the joined flow channel 155 of which one end is the junction 162, the laminar flow including the biological particles that flow substantially in a line is formed.

The biological particle sorting microchip 150 further includes the particle sorting unit 157 at the other end of the joined flow channel 155. Fig. 5 is an enlarged view of the particle sorting unit 157. As illustrated in A of the drawing, at the other end, the joined flow channel 155 is connected to a biological particle recovery flow channel 159 via a connection flow channel 170. As illustrated in A of the drawing, the joined flow channel 155, the connection flow channel 170, and the biological particle recovery flow channel 159 may be coaxial with each other.

In a case where a sorting target particle flows to the particle sorting unit 157, as illustrated in B of the drawing, a flow from the joined flow channel 155 through the connection flow channel 170 to enter the biological particle recovery flow channel 159 is formed, and the sorting target particle is recovered into the biological particle recovery flow channel 159. In this manner, the sorting target particle flows to the biological particle recovery flow channel 159 through the connection flow channel 170.

In a case where the biological particle that is not the sorting target particle flows into the particle sorting unit 157, the biological particle that is not the sorting target particle flows into one of two branching flow channels 158 as illustrated in C of the drawing. In this case, the flow to enter the biological particle recovery flow channel 159 is not formed. As described above, the biological particle sorting microchip 150 includes two branching flow channels 158 connected to the joined flow channel 155 at the other end of the joined flow channel 155.

As illustrated in Fig. 2, the biological particle sorting microchip 150 includes an introduction flow channel 161 for introducing the liquid into the connection flow channel 170.

By introducing the liquid from the introduction flow channel 161 into the connection flow channel 170, the connection flow channel 170 is filled with the liquid. Thus, it is possible to prevent unintended biological particles from entering the biological particle recovery flow channel 159.

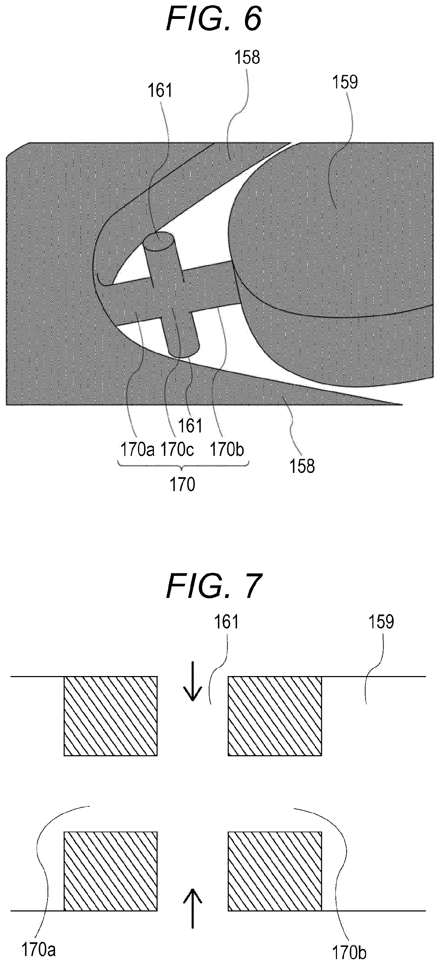

The introduction flow channel 161 and the connection flow channel 170 will be described with reference to Figs. 6 and 7. Fig. 6 is a schematic perspective view of the vicinity of the connection flow channel 170. Fig. 7 is a schematic cross-sectional view on a plane passing through a center line of the introduction flow channel 161 and a center line of the connection flow channel 170. The connection flow channel 170 includes a flow channel 170a on a side of the sorting discrimination unit 156 (hereinafter, also referred to as an upstream side connection flow channel 170a), a flow channel 170b on a side of the biological particle recovery flow channel 159 (hereinafter, also referred to as a downstream side connection flow channel 170b), and a connection 170c between the connection flow channel 170 and the introduction flow channel 161. The introduction flow channel 161 is provided so as to be substantially perpendicular to an axis of the flow channel of the connection flow channel 170. In Figs. 6 and 7, the two introduction flow channels 161 are provided so as to face each other at substantially the center position of the connection flow channel 170, but only one introduction flow channel may be provided.

As indicated by arrows in Fig. 7, liquid is supplied from the two introduction flow channels 161 to the connection flow channel 170. The liquid flows from the connection 170c to both the upstream side connection flow channel 170a and the downstream side connection flow channel 170b.

In a case where the recovery step is not performed, the liquid flows as follows.

The liquid that flows to the upstream side connection flow channel 170a exits from a connection surface to the joined flow channel 155 of the connection flow channel 170, and then flows separately to the two branching flow channels 158. Since the liquid exits from the connection surface in this manner, it is possible to prevent the liquid and the biological particle that do not need to be recovered into the biological particle recovery flow channel 159 from entering the biological particle recovery flow channel 159 through the connection flow channel 170. The liquid that flows to the downstream side connection flow channel 170b flows into the biological particle recovery flow channel 159. Therefore, the biological particle recovery flow channel 159 is filled with the liquid.

Also in a case where the recovery step is performed, the liquid may be supplied from the two introduction flow channels 161 to the connection flow channel 170. However, due to pressure fluctuation in the biological particle recovery flow channel 159, especially, by generating a negative pressure in the biological particle recovery flow channel 159, a flow from the joined flow channel 155 through the connection flow channel 170 to the biological particle recovery flow channel 159 is formed. That is, a flow is formed from the joined flow channel 155 to the biological particle recovery flow channel 159 through the upstream side connection flow channel 170a, the connection 170c, and the downstream side connection flow channel 170b in this order. Therefore, the sorting target particle is recovered into the biological particle recovery flow channel 159.

As illustrated in Fig. 2, the biological particle recovery flow channel 159 is formed so as to extend linearly from the particle sorting unit 157, make a U-turn, and then reach the same surface as a surface on which the sample liquid inlet 151 and the sheath liquid inlet 153 are formed. The liquid that flows through the biological particle recovery flow channel 159 is discharged out of the chip from a recovery flow channel terminal 163.

As illustrated in Fig. 2, the two branching flow channels 158 are also formed so as to extend linearly from the particle sorting unit 157, make a U-turn, and then reach the same surface as the surface on which the sample liquid inlet 151 and the sheath liquid inlet 153 are formed. The liquid that flows through the branching flow channel 158 is discharged out of the chip from a branching flow channel terminal 160.

In Fig. 2, a display method of the biological particle recovery flow channel 159 is changed from a solid line to a dotted line at the U-turn. This change indicates that the position in the optical axis direction changes on the way. By changing the position in the optical axis direction in this manner, the biological particle recovery flow channel 159 is not communicated with the branching flow channel 158 in a portion intersecting with the branching flow channel 158.

Both the recovery flow channel terminal 163 and two branching flow channel terminals 166 are formed on the surface on which the sample liquid inlet 151 and the sheath liquid inlet 153 are formed. Moreover, an introduction flow channel inlet 164 for introducing a liquid into an introduction flow channel 161 as described later is also formed on the surface. In this manner, in the biological particle sorting microchip 150, all of the inlet from which the liquid is introduced and the outlet from which the liquid is discharged are formed on one surface. Therefore, attachment of the chip to the biological particle analyzing device 100 becomes easy. For example, as compared with a case where the inlets and/or outlets are formed on two or more surfaces, connection between flow channels provided on the biological particle sorting device 100 and the flow channels of the biological particle sorting microchip 150 becomes easy.

The biological particle recovery flow channel 159 includes a detection region 180 for detecting the recovered biological particles. The second light irradiation unit 201 irradiates the recovered biological particles with light in the detection region 180. Then, the second detection unit 202 detects light generated by the light irradiation. The second detection unit 202 transmits information regarding the detected light to the information processing unit 103. The information processing unit 103 may be configured to count, for example, the number of sorted particles on the basis of the information, and in particular, counts the number of sorted particles per unit time.

Fig. 3 is a flowchart illustrating processing performed on the biological particles. As illustrated in the drawing, the biological particle sorting operation using the biological particle sorting microchip 150 includes a flow step S1 of allowing the liquid containing the biological particles to flow through the joined flow channel 155, a determination step S2 of determining whether the biological particles that flow through the joined flow channel 155 are the sorting target particles, and a recovery step S3 of recovering the sorting target particles into the biological particle recovery flow channel 159. Each step is described below.

(3-1) Flow Step

In the flow step S1, the sample liquid containing the biological particles and the sheath liquid not containing the biological particles are introduced from the sample liquid inlet 151 and the sheath liquid inlet 153 into the sample liquid flow channel 152 and the sheath liquid flow channel 154, respectively. The sample liquid may be, for example, a biological sample containing biological particles, and particularly may be a biological sample containing biological particles such as cells.

(3-2) Determination Step

In the determination step S2, it is determined whether or not the biological particle that flows through the joined flow channel 155 is the sorting target particle. Specifically, the first detection unit 102 detects light generated by the light irradiation to the biological particles by the first light irradiation unit 101. The information processing unit 103 (in particular, the determination unit 105) can make the determination on the basis of the light generated by the light irradiation of the biological particle by the first light irradiation unit 101. Furthermore, the information processing unit 103 generates data related to the number of detected particles per unit time on the basis of the detected light (particularly, on the basis of the number of times of detection of light).

The signal processing unit 104 included in the information processing unit 103 may process a waveform of the digital electrical signal obtained by the detection unit 102 to generate information (data) regarding a feature of the light used for the determination by the determination unit 105. As the information associated with the feature of the light, the signal processing unit 104 may acquire, for example, one, two, or three of a width of the waveform, a height of the waveform, and an area of the waveform from the waveform of the digital electric signal. Furthermore, the information regarding the feature of the light may include, for example, time when the light is detected.

On the basis of the light generated by irradiating the biological particle that flows in the flow channel with light, the determination unit 105 included in the information processing unit 103 determines whether the biological particle is the sorting target particle. The determination may be performed, for example, by whether the information regarding the feature of the light meets a reference designated in advance. The reference may be a reference indicating that the biological particles are sorting target particles, and may be so-called gate information.

(3-3) Recovery step

In the recovery step S3, the biological particle determined to be the sorting target particle at the determination step S2 is recovered into the biological particle recovery flow channel 159. The recovery step S3 is performed in the particle sorting unit 157 in the chip 150. In the particle sorting unit 157, the laminar flow that flows through the joined flow channel 155 separately flows to the two branching flow channels 158.

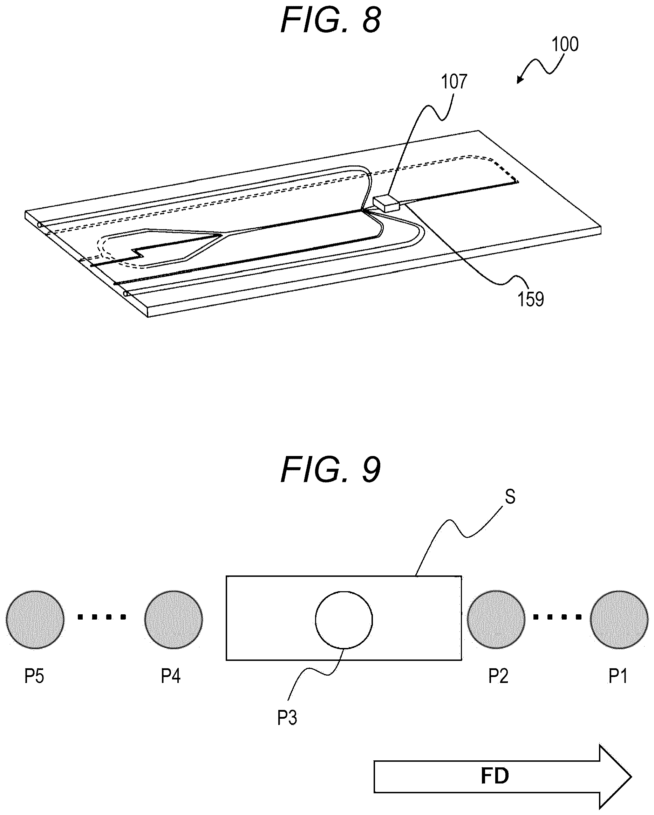

In the recovery step S3, due to the pressure fluctuation in the biological particle recovery flow channel 159, the sorting target particle is recovered into the biological particle recovery flow channel through the connection flow channel. The recovery may be performed, for example, by generating the negative pressure in the biological particle recovery flow channel 159 as described above. For example, as illustrated in Fig. 8, the negative pressure can be generated when a wall defining the biological particle recovery flow channel 159 is deformed by a pressure change element (also referred to as an actuator) 107 attached to the outside of the microchip 150. The information processing unit 103, in particular, the sorting control unit 106 can drive the pressure change element 107 to deform the wall. The pressure change element 107 may be, for example, a piezo actuator. The negative pressure may form the flow entering the biological particle recovery flow channel 159. In this manner, the sorting target particles are sorted in the particle sorting unit 157 and recovered into the biological particle recovery flow channel 159.

(4) Guard time

A guard time may be set in order to sort the sorting target particle with a target purity or a target yield by a biological particle device that sorts the sorting target particle from among the biological particles flowing in a line, such as the biological particle sorting device 100 described in (3) above. The guard time will be described below.

Fig. 9 is a schematic diagram illustrating that biological particles P1 to P5 flow in a line in the flow direction FD. Among these biological particles, a case where the particle P3 is a sorting target particle and the other particles are not sorting target particles is assumed.

As described in (3) above, the biological particle sorting device 100 recovers the sorting target particle into the biological particle recovery flow channel 159 by generating negative pressure. Thus, at the same time as the recovery of the sorting target particle, the liquid around the particle is also recovered into the biological particle recovery flow channel 159. That is, as illustrated in the drawing, the liquid present in the region S is also recovered in the biological particle recovery flow channel 159 along with the recovery of the particles P3.

In the drawing, a state in which no other particle is present in the region S is illustrated. Thus, even when P3 is recovered, other particles are not recovered in the biological particle recovery flow channel.

In a case where particles not to be sorted are present in the region S, particles not to be sorted are also recovered in addition to the sorting target particles P3. When particles not to be sorted are also recovered, the purity of the sorting target particles in the recovered particles decreases. Therefore, in order to control the purity, it is conceivable that the particle P3 is not sorted and/or the range of the region S is adjusted in a case where another particle exists in the region S.

The distance from the position where the biological particle is irradiated with light by the first light irradiation unit 101 to the particle sorting unit 157 and the flow rate of the biological particle flowing in the joined flow channel are known. Thus, it is possible to specify the timing considered to be optimal for executing the sorting operation (particularly, the timing for driving the pressure change element 107). In the present specification, the specified timing is referred to as optimal timing. By shifting the timing of executing the sorting operation from the optimal timing, it is possible to grasp the relationship between the shifted time and the probability of sorting particles other than the sorting target particles. Note that the difference between the timing of executing the sorting operation and the optimal timing is also referred to as a delay time or an offset time.

Regarding the probability of sorting particles other than the sorting target particles, a sorting success rate (also referred to as recovery) can be used. The sorting success rate may be a ratio of the number of successfully sorted particles to a predetermined number of sorting attempts, and is represented by, for example, (number of successfully sorted particles/number of sorting attempts). Here, in order to specify the number of successfully sorted particles, the second light irradiation unit 201 and the second detection unit 202 described in (3) above may be used. That is, the biological particle sorting device of the present disclosure may be configured to specify the number of successfully sorted particles using the second light irradiation unit 201 and the second detection unit 202.

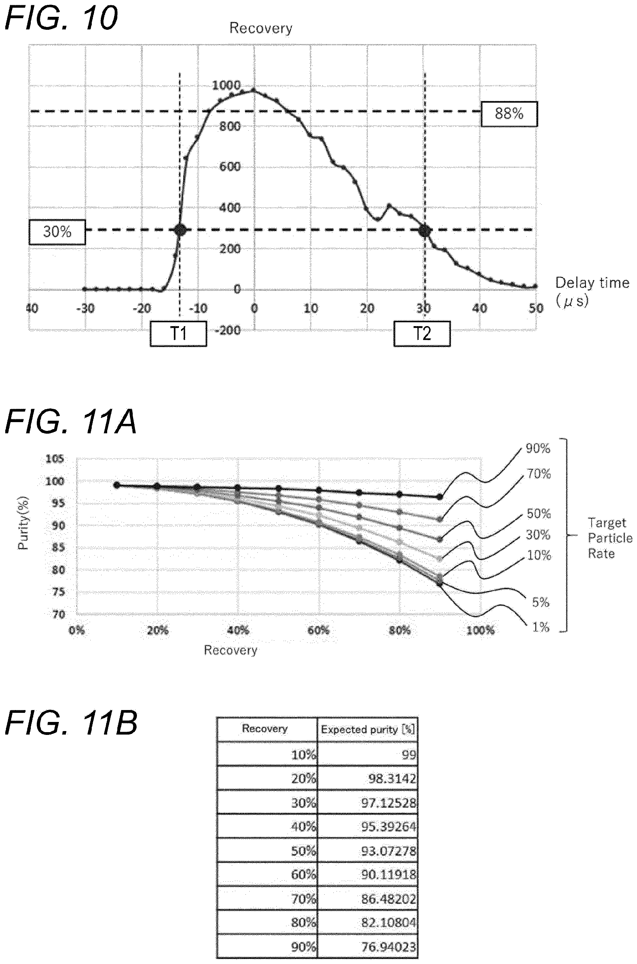

From a graph with the delay time on the horizontal axis and the sorting success rate on the vertical axis, it is possible to grasp the relationship between the two. An example of the graph is illustrated in Fig. 10. In the drawing, the horizontal axis represents the delay time ($\mu$s), and the vertical axis represents the ratio of the number of sorting successes to the number of sorting attempts of 1000, which is also called recovery. The relationship can be grasped by such profile data, and this is also called a recovery slope.

In Fig. 9 described above, the range of the region S can be controlled by adjusting the negative pressure generated at the time of the sorting operation. The negative pressure can be controlled by adjusting a drive waveform and a drive voltage of a voltage applied to the pressure change element 107. The drive waveform and the drive voltage are adjusted, for example, so that a range of the sorting success rate that is equal to or greater than a predetermined threshold or exceeds the threshold falls within a predetermined delay time range. By adjusting in this manner, the drive waveform and the drive voltage can be made appropriate. The threshold is referred to as a first threshold.

For example, in Fig. 10, 88% is indicated as the threshold. The drive waveform and the drive voltage are adjusted so that the delay time range in which the sorting success rate is equal to or more than 88% falls within a predetermined range.

As described above, the biological particle sorting device of the present disclosure may be configured to adjust the applied voltage in this manner. The adjustment contributes to accurately sorting only the sorting target particles.

After the adjustment of the applied voltage, the delay time at which the sorting success rate is equal to or less than a predetermined threshold or less than the threshold may be specified. The threshold is referred to as a second threshold.

For example, in Fig. 10, 30% is set as the second threshold. Then, from the drawing, the delay times in a case where the sorting success rate is 30% are specified to be T1 ($\mu$sec) and T2 ($\mu$sec). In a case where another particle exists within the range of T1 to T2 with respect to the sorting target particle, when the sorting process of the sorting target particle is executed, there is a high possibility that the another particle is also recovered in the biological particle recovery flow channel. Thus, in a case where another particle is detected during the period from "the time when the sorting target particle is detected + T1" to "the time when the sorting target particle is detected + T2", the sorting process for the sorting target particle is not executed. In a case where no other particle is detected, the sorting process is performed. By controlling whether to execute the sorting process in this manner, the purity of the sorting target particles can be controlled. In the present specification, the delay times T1 and T2 set to prevent the recovery of other particles present near the sorting target particle are also referred to as the guard time.

As described above, the biological particle sorting device of the present disclosure may be configured to set the guard time. The biological particle sorting device of the present disclosure can determine whether to execute a sorting process on the basis of the guard times as described above. Note that other thresholds may be adopted to set the guard time.

A case where another particle exists within the guard time of the sorting target particle and the another particle is also the sorting target particle is also assumed. In this case, in order to more appropriately measure the recovery slope described above, the sorting process may not be executed. On the other hand, in the sorting step after the recovery slope described above is measured (for example, the sorting step in the OP mode to be described later), the purity does not decrease even if the sorting process is performed in this case, and thus the sorting process may be performed. The term guard time is a term used particularly in the latter case.

The user of the biological particle sorting device may wish to set the purity or the sorting efficiency as target sorting parameters. The target sorting parameters such as purity and sorting efficiency have a predetermined relationship with the sorting success rate. Such a relationship is based on the configuration of the biological particle sorting device, particularly the configuration of the sorting unit, and the relationship can be acquired in advance. For example, the biological particle sorting device 100 that performs sorting with the chip 150 described above has a relationship as illustrated in Fig. 11A. This drawing is a graph illustrating the relationship between the sorting success rate (Recovery) and the purity (Purity). In the drawing, the horizontal axis represents the sorting success rate (Recovery), and the vertical axis represents the expected purity. The drawing illustrates the relationship in a case where the ratio of the sorting target particles (target particle rate) in all particles in a sample is 1%, 5%, 10%, 30%, 50%, 70%, and 90%. Furthermore, in a case where the ratio is 1%, the sorting success rate (Recovery) and the expected purity (Expected Purity) corresponding to each sorting success rate are illustrated in Fig. 11B.

As illustrated in Fig. 11A, for example, the sorting success rate decreases as the purity of the sorting target particle to be sorted is increased, and conversely, the sorting success rate increases as the purity is decreased.

As illustrated in Fig. 11B, in a case where the sorting process is performed so that the purity of the sorting target particles is equal to or more than 97% for a sample having a sorting target particle content ratio of 1%, the sorting success rate needs to be set to 30% or less. Then, in order to set the sorting success rate to 30% or less, as illustrated in Fig. 10, it is necessary to set the guard time so that the negative delay time is equal to or less than T2 and the positive delay time is equal to or more than T2.

In the profile data, in a case where the sorting success rate is about 30% as described above, the relationship between the sorting success rate and the delay time is strong, and the deviation from the actual measurement result is small.

However, in a case where the sorting success rate is equal to or less than about 10%, the variation in the measurement result becomes large, and the profile data may not accurately reflect the relationship between the sorting success rate and the delay time.

Here, in a case where the sorting process is performed so that the purity of the sorting target particle is, for example, equal to or more than 99%, the sorting success rate needs to be set to 10% or less from the relationship illustrated in Fig. 11B. In a case where the sorting success rate is 10% or less, the variation in the measurement results is large as described above. Thus, in a case where such an extremely high purity sorting result is required, if the guard time is set on the basis of the profile data, an intended sorting result may not be obtained. This also applies to the sorting efficiency.

The present inventors have found that an appropriate guard time can be set by adopting a parameter adjustable mode as described in (5) below, particularly by using an approximate model derived in the mode.

Hereinafter, in order to better understand the sorting operation, an example of a screen used in the sorting operation will be described, and then, an example of sorting condition setting will be described.

(5) Example of sorting operation

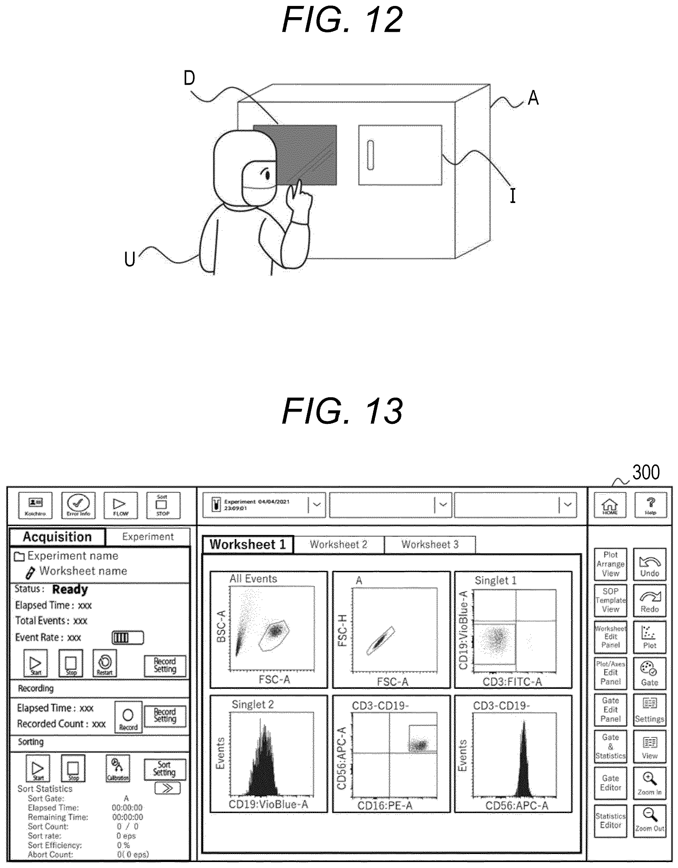

The biological particle sorting device according to the present disclosure may have a display unit D capable of touch input, for example, as illustrated in Fig. 12. As illustrated in the drawing, the display unit may be arranged on any surface of the housing of the device, particularly on a side surface, and for example, the screen of the display unit may be arranged at a position where the user standing (or sitting) near the device can perform the touch input. Various screens described later may be displayed on the display unit. Furthermore, as illustrated in the drawing, the biological particle sorting device according to the present disclosure may have an introduction section I for introducing a biological particle-containing sample into the device. For example, a container containing the sample is put into the device from the introduction section, and the container is connected to a predetermined sample line. Then, after the connection, the sorting process may be executed. In addition, the sorting target particles may be recovered into the container accommodated in the introduction section. Then, after completion of the sorting process, the container in which the sorting target particles are recovered may be taken out from the introduction section.

(5-1) Example of screen displayed in sorting operation

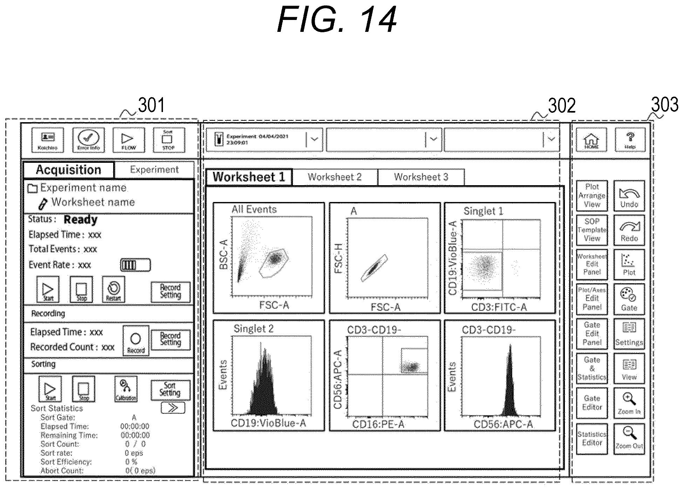

An example of a screen displayed by the biological particle sorting device according to the present disclosure will be described with reference to Fig. 13. A screen 300 illustrated in the drawing is an example of a screen (also referred to as a processing condition setting screen) for setting the conditions of the biological particle sorting process. As indicated by a broken line in Fig. 14, the screen includes a sorting operation control area (hereinafter also referred to as a "first display area") 301 displaying buttons for controlling (particularly executing) a sorting operation by the biological particle sorting device 100, a measurement data display area (hereinafter also referred to as a "second display area") 302 displaying one or more pieces of measurement data used to set the sorting conditions, and an operation button area (hereinafter also referred to as a "third display area") 303 displaying one or more operation buttons used to set the sorting conditions (for example, gate information). The operation button may include a call button that displays various operation panels for setting the sorting conditions.

The arrangement of the three areas described above may be changeable. For example, the biological particle sorting device may be configured so that the screen is changeable from a state in which the first display area is arranged on the right side and the third display area is arranged on the left side to a state in which the former area is arranged on the left side and the latter area is arranged on the right side. In addition, it may be configured so that the screen is changeable so as to be opposite thereto. Thus, it is possible to cope with the user's dominant hand or convenience, and the operability can be improved.

(First display area)

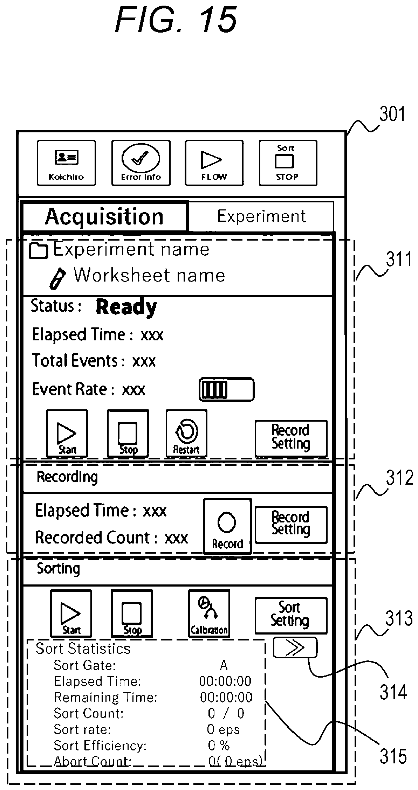

The first display area 301 will be described below with reference to Fig. 15. As illustrated in the drawing, the first display area includes an area 311 including one or more buttons that controls flowing of the biological particle-containing sample into the device (particularly, in a microchip on which sorting is performed), an area 312 including one or more buttons that controls recording of a detection result by the detection unit, and an area 313 including one or more buttons that controls the sorting operation. Items displayed in these areas and the buttons arranged in these areas may be appropriately selected by a person skilled in the art.

For example, the area 311 may include a start button (Start button) for starting the flow of the biological particle-containing sample into the device, a button (Stop button) for stopping the flow of the biological particle-containing sample into the device, and the like. In addition, in the area 311, an elapsed time of period (Elapsed Time) from a start of flowing of the biological particle-containing sample into the device, the number of detected events (Total Events), an event rate (Event rate), and the like may be displayed.

The area 312 may include a record start button (Record button) for starting recording of the light data of the particle detected by the detection unit. In addition, in the area 312, the elapsed time of period from the start of the recording (Elapsed Time) and the number of recorded events (Recorded Count) may be displayed.

The area 313 may include a start button (Start button) for starting the sorting process of the biological particle, a button (Stop button) for stopping the sorting, a button (Calibration button) for executing calibration for sorting, a sorting setting button (Sort Setting button) for performing setting related to the sorting process, and the like. Furthermore, in the area 313, data 314 indicating a status of sorting may be indicated. The data indicating the status of sorting may be, for example, statistical data as indicated as Sort Statistics in the drawing.

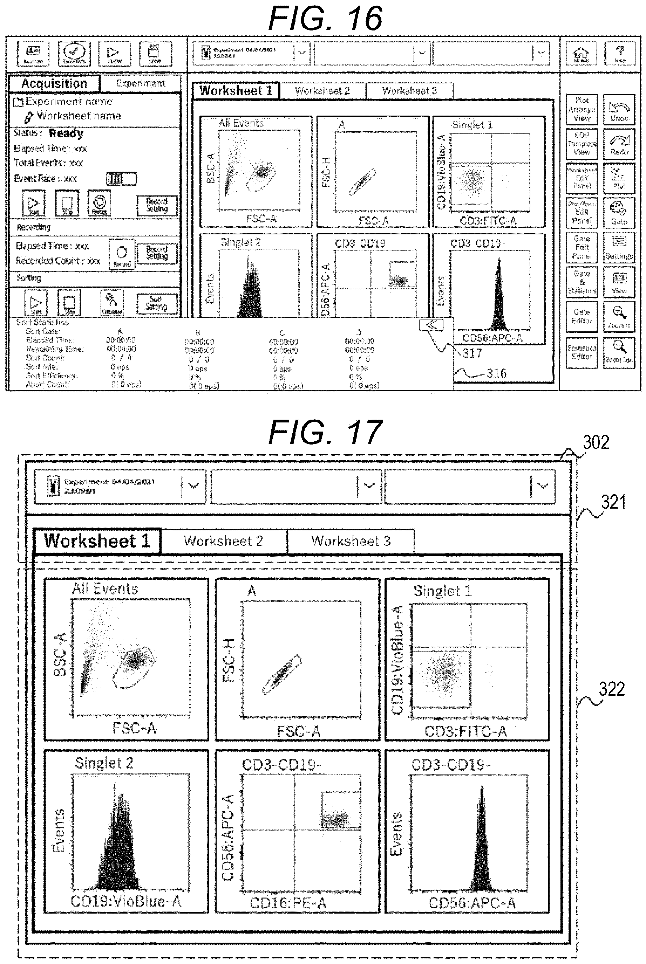

In the drawing, data related to one gate (gate A) is illustrated as the data indicating the status of sorting, but for example, data related to another gate may be displayed in response to selection of a data expansion button 315. Fig. 16 illustrates an example of a screen displayed in a case where the data expansion button 315 is selected. As illustrated in the drawing, in response to selection of the data expansion button 315, an area 316 for displaying data indicating a sorting status is displayed in the screen 300. As illustrated in the drawing, the area 316 may be displayed on the second display area 302 (and on the third display area 303 as necessary) in an overlapping manner. In response to the display of the area 316, a data reduction button 317 may be displayed instead of the data expansion button 315. In response to selection of the data reduction button 317, as illustrated in Fig. 15, the state returns to the original state.

Furthermore, as illustrated in the upper part of Fig. 15, in the first display area, for example, a name of an experiment file (Experiment name) and a name of a worksheet (Worksheet name) for specifying the sorting conditions may be displayed. The worksheet is, for example, data including the measurement data and the sorting condition data (for example, the gate information). The biological particle sorting device 100 is configured so that the user can perform the gate setting for the measurement data on the worksheet. Furthermore, the biological particle sorting device 100 is configured to be able to sort particles based on the gate set on the worksheet.

In addition, as illustrated in the upper part of the drawing, a button for displaying a user property, a button for displaying error information, a button for starting or ending the sorting process, and the like may be further displayed in the first display area.

(Second display area)

The second display area 302 will be described below with reference to Fig. 17. As illustrated in the drawing, one or more pieces of measurement data are displayed in the second display area. The one or more pieces of measurement data are data generated by the information processing unit on the basis of a detection result by the detection unit (particularly, the first detection unit). Each piece of measurement data may be, for example, histogram data or plot data (for example, density plot data, dot plot data, contour plot data, and the like). A specific configuration of the measurement data may be appropriately selected by the user. By performing gate setting on the measurement data, the sorting target particle is specified. As described above, the screen 300 may be configured to receive an input of the gate information for specifying the sorting target particle.

In the drawing, the second display area is divided into an area 321 that displays the experiment file name and the worksheet name and an area 322 that displays the measurement data, but the configuration of the second display area is not limited to that illustrated in the drawing.

In the drawing, a worksheet named "Worksheet 1" is selected, and six pieces of measurement data included in the worksheet are displayed. In a first row, all three pieces of measurement data are the plot data, and a gate is set for each piece of plot data. Three pieces of measurement data are also displayed in a second row, two of which are histogram data and one of which is the plot data.

As illustrated in the area 321 in the drawing, an experimental file having a file name "Experiment 04/04/2021 23:09:01" is opened, and it is indicated that the experiment file includes a plurality of worksheets (Worksheet 1, Worksheet 2, and Worksheet 3). The plurality of worksheets may be switched between an active state and an inactive state by selecting a tab. In the drawing, a tab of the Worksheet 1 is selected, and the Worksheet 1 is activated.

(Third display area)

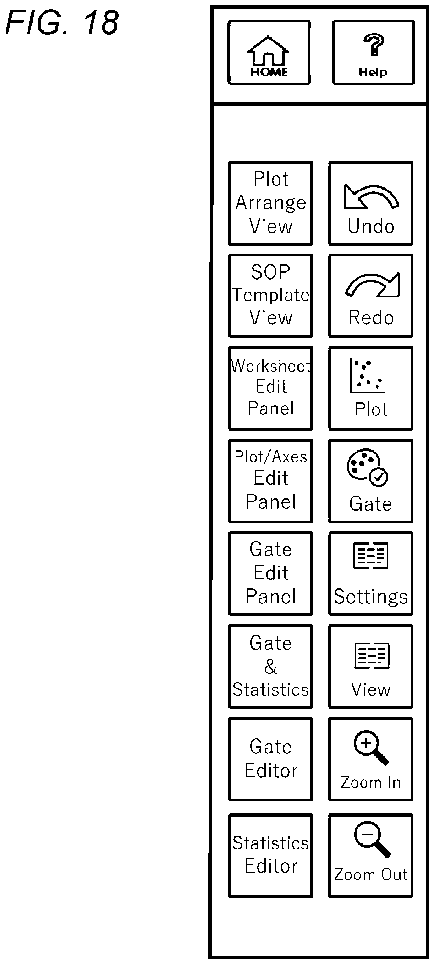

The third display area 303 will be described below with reference to Fig. 18. As illustrated in the drawing, a plurality of buttons is displayed in the third display area.

These operation buttons indicate sorting conditions (the sorting conditions include, for example, the gate information. The case where sorting is not performed is also referred to as an analysis condition. one or more operation buttons to be used for setting. More specifically, these operation buttons may include, in particular, an operation button for setting the gate for the measurement data in the second display area or an operation button for editing the measurement data itself. These operation buttons may include one or more call buttons that displays various operation panels for setting the sorting conditions.

Examples of the operation buttons are, for example, a Redo button, an Undo button, a zoom-in button, and a zoom-out button as illustrated in the drawing. Furthermore, examples of the call button may be a Plot button, a Gate button, a View button, and a Settings button as illustrated in the drawing. When these buttons are tapped, a plot operation panel, a gate operation panel, a display mode operation panel, and a setting operation panel may each be displayed in the processing condition setting operation screen. In addition, in the third display area, other operation buttons such as a button for changing the display mode in the second display area (Plot arrange view button) may be displayed.

(5-2) Example of setting of sorting condition for sorting process

(5-2-1) Gate setting step S11

The biological particle sorting device 100 allows a biological sample containing biological particles to flow as a sample liquid into the biological particle sorting microchip 150 for biological particle sorting. Then, the biological particle sorting device 100 acquires light data of light generated by irradiating the biological particle with light by the first light irradiation unit 101 and the first detection unit 102.

These processes may be performed by the user selecting a predetermined button on the screen 300. For example, in response to selection of the start button in the area 311 in the first display area 301, the biological particle sorting device 100 starts flowing the biological sample into the microchip 150. Furthermore, in response to selection of the recording start button in the area 312, acquisition of light data is started.

The user sets the gate information for specifying the sorting target particle using the light data. In order to set the gate information, the biological particle sorting device 100 displays measurement data based on the light data in the second display area 302. Then, the user sets a gate to the measurement data, develops the set gate to further generate measurement data, and further sets a gate on the generated measurement data. By appropriately repeating the setting and development of the gate with respect to the measurement data in this manner, the gate information for sorting the sorting target particle is set. The setting of the gate information may be appropriately performed by those skilled in the art.

(5-2-2) Sorting mode selection step S12

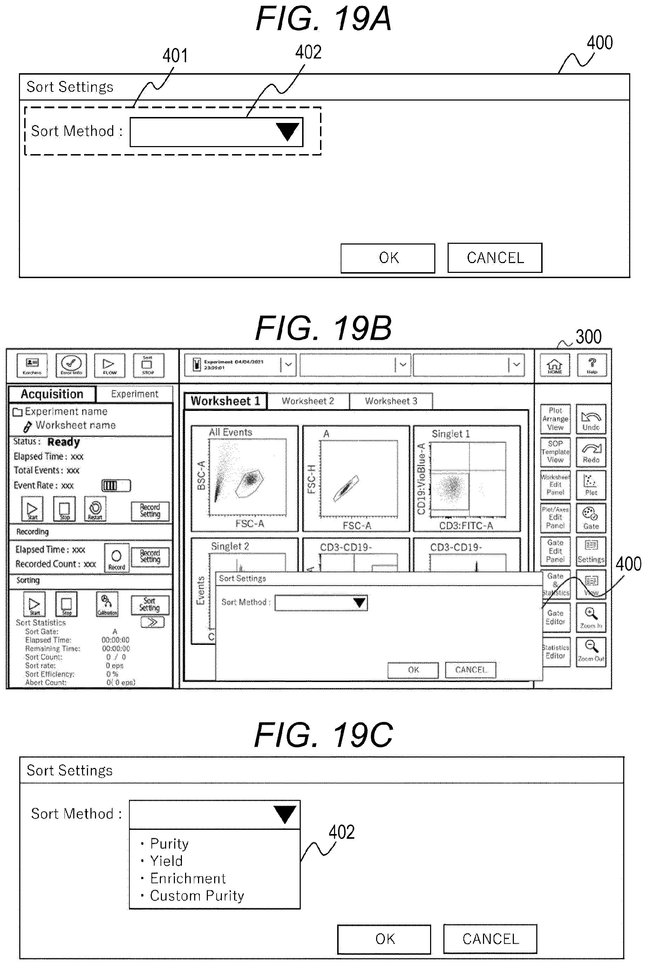

In response to the user selecting the sorting setting button (Sort setting button) in the first display area 301, the biological particle sorting device 100 displays a sorting mode selection screen (also referred to as a parameter reception screen) 400 illustrated in Fig. 19A on the display unit. For example, as illustrated in Fig. 19B, the sorting mode selection screen 400 may be displayed so as to overlap the screen 300 for setting the sorting condition for the biological particle sorting process.

The sorting mode selection screen 400 includes a selection area 401 for allowing the user to select the sorting mode. The selection area 401 may be configured so that the user can select any one of a plurality of sorting modes.

For example, as illustrated in Fig. 19C, the selection area 401 may be configured to include a pull-down menu that displays a plurality of sorting modes in a list form. Fig. 19C illustrates that four sorting modes are selectable. The four sorting modes are as follows.

Purity mode (indicated as Purity in the drawing): a sorting mode in which the sorting process is performed so that the purity of the sorting target particles becomes a predetermined target value.

Yield mode: a sorting mode in which the sorting process is performed so that the yield of the sorting target particles becomes a predetermined target value.

Sorting efficiency prioritized mode (Enrichment): a sorting mode in which the sorting process is performed so that the sorting efficiency is further enhanced than in the yield mode.

Parameter adjustable mode (Custom Purity): a sorting mode in which a sorting process is performed on the basis of a target sorting parameter input by a user.

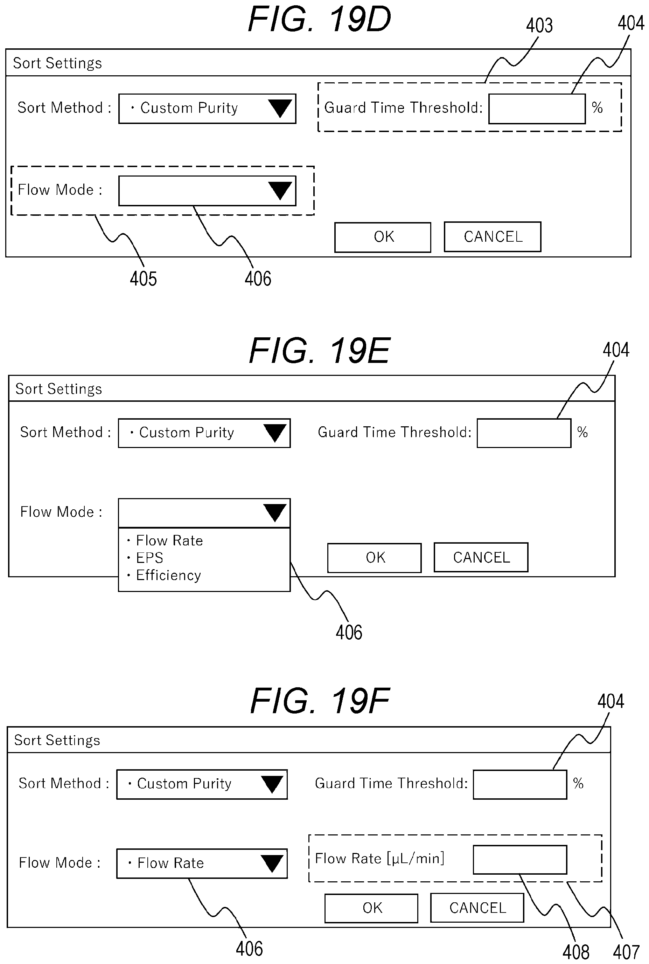

It is assumed that the user selects a parameter adjustable mode (Custom Purity) from the four sorting modes. In response to the selection of the parameter adjustable mode, the biological particle sorting device 100 displays a guard time threshold (Guard Time Threshold, which is the second threshold described in (4) above) input area 403 on the display unit as illustrated in Fig. 19D. The area 403 includes an input field 404 in which a numerical value (guard time threshold) desired by the user can be input.

Alternatively, in response to the selection of the parameter adjustable mode, the biological particle sorting device 100 may display an input area for inputting purity or sorting efficiency on the display unit.

As described above, the biological particle sorting device of the present disclosure may be configured to receive an input of a parameter (for example, the purity of the sorting target particle, the sorting efficiency of the sorting target particle, or both of them) related to the sorting result of the sorting target particle as the target sorting parameter.

The guard time threshold input area 403 may not be displayed in a case where the purity mode and the yield mode are selected, but may be displayed.

Furthermore, in response to the selection of the parameter adjustable mode, the biological particle sorting device 100 displays a target sorting parameter input area (Flow Mode) 405 on the display unit as illustrated in Fig. 19D. The area 405 may be configured so that the user can select one of a plurality of inputtable target sorting parameters.

As illustrated in Fig. 19E, the area 405 may be configured as a pull-down menu 406 that displays a plurality of inputtable target sorting parameters in a list form. Fig. 19E illustrates that three target sorting parameters are selectable. The three target sorting parameters are as follows.

Flow Rate: Flow rate at which sample liquid is supplied

Number of events per unit time (also referred to as detection frequency. EPS (event per second)): the number of events detected by the first detection unit per unit time

Sorting efficiency (Efficiency): sorting efficiency of sorting target particles

The sorting efficiency may be calculated on the basis of the number of times of detection of the sorting target particle and the number of times of execution of sorting. The sorting efficiency may be expressed by, for example, a mathematical expression of (sorting efficiency) = (the number of times of executing sorting/the number of times of detecting sorting target particles) $\times$ 100.

The biological particle sorting device 100 displays an input area 407 of the selected target sorting parameter on the display unit in response to the selection of the target sorting parameter. For example, in a case where the flow rate is selected as the target sorting parameter, as illustrated in Fig. 19F, an input box 408 for inputting the flow rate desired by the user is displayed in the area 407. In a case where another target sorting parameter is selected, similarly, an input box for inputting a value desired by the user is displayed.

As described above, the biological particle sorting device of the present disclosure may be configured to receive an input of a parameter (for example, the detection frequency of the biological particle subjected to the sorting determination, the flow amount of the sample flowing through the flow channel, or both of them) related to the flow amount of the biological particle as the target sorting parameter.

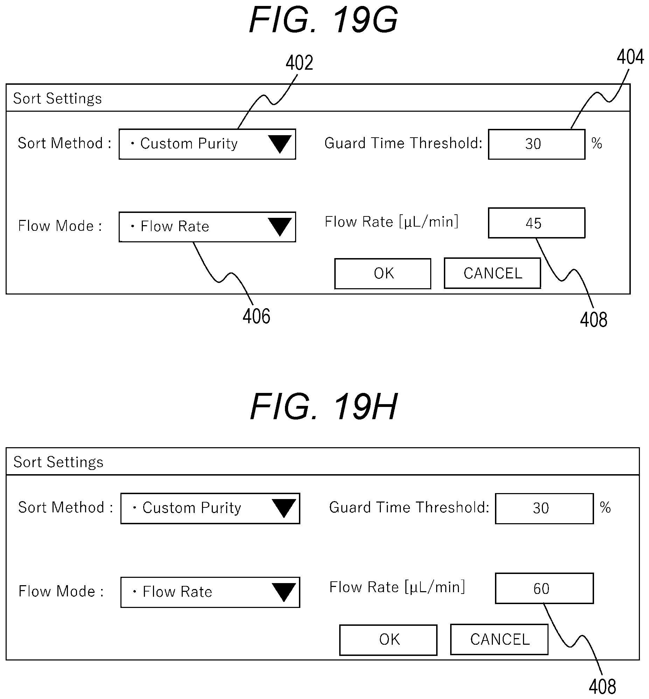

For example, as illustrated in Fig. 19G, when the selection of the sorting mode and the input of the necessary target sorting parameter are completed, the user selects the OK button illustrated in the drawing. In response to the selection of the OK button, the biological particle sorting device 100 may close the screen 400. Thus, the sorting mode and the target sorting parameter in the sorting step of the later-described section are determined.

Note that, in a case where the CANCEL button illustrated in the drawing is selected, the biological particle sorting device 100 may close the screen 400 without determining the sorting mode.

As described above, the biological particle sorting device 100 may be configured to be capable of displaying the parameter reception screen that receives an input of a target sorting parameter.

(5-2-3) Sorting step S13

The biological particle sorting device 100 executes the sorting process on the basis of the gate information set in the gate setting step and the sorting mode selected in the sorting mode selection step. For example, the biological particle sorting device 100 may start the sorting process in response to selection of a start button for starting the sorting process of biological particles in the area 313 by the user.

(5-2-3-1) Sorting process in case where parameter adjustable mode is selected

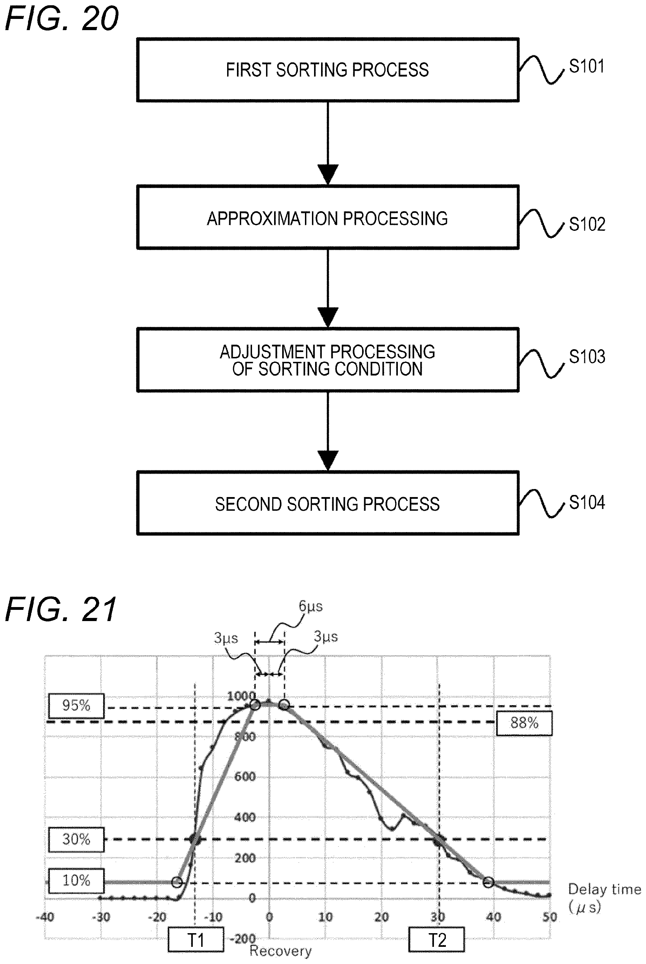

Processing executed by the biological particle sorting device 100 in a case where the parameter adjustable mode is selected as the sorting mode will be described with reference to Fig. 20. The drawing is an example of a flowchart of the processing.

(Step S101: First Sorting Process)

In step S101 illustrated in the drawing, the biological particle sorting device 100 executes a first sorting process of sorting the biological particle according to a preset sorting conditions. The sorting conditions include the gate information set in the gate setting step described above. Moreover, the sorting conditions also include a parameter related to the sorting result of the sorting target particles and a parameter related to the flow amount of the biological particle. These sorting conditions will be described below.

The sorting condition includes the gate information set in the gate setting step as described above. The biological particle sorting device 100 acquires light data of each biological particle flowing through the flow channel by light irradiation by the first light irradiation unit 101 and detection of light generated by the light irradiation by the first detection unit 102. Then, the information processing unit 103 determines whether the light data satisfies a condition defined by the set gate information (that is, whether the biological particle is a sorting target particle defined by the gate information). In a case where the condition defined by the gate information is satisfied, the biological particle sorting device 100 (for example, the sorting unit 6104, in particular, the actuator 107) executes the biological particle sorting process. If not, the biological particle sorting device 100 does not perform the sorting process.

As described above, the sorting condition also includes a parameter related to the sorting result of the sorting target particle and a parameter related to the flow amount of the biological particle. These parameters used in the first sorting process are set in advance. That is, in the first sorting process, the biological particle sorting device 100 executes the biological particle sorting process so that these preset parameters are satisfied.

The sorting condition further includes, for example, a preset purity condition or a preset sorting efficiency condition as the parameter related to the sorting result of the sorting target particle. In the first sorting process, the biological particle sorting device 100 can execute the biological particle sorting process so as to satisfy a preset purity condition or sorting efficiency condition.

The sorting condition further includes, for example, a preset detection frequency condition (a condition regarding a detection frequency of the biological particle subjected to the sorting determination) or a preset flow rate condition (a condition regarding a flow rate of the sample flowing through the flow channel) as a parameter regarding the flow amount of the biological particle. In the first sorting process, the biological particle sorting device 100 can execute the biological particle sorting process so as to satisfy the preset detection frequency condition or the preset flow rate condition.

In the first sorting process, the biological particle sorting device 100 executes the sorting process on the biological sample according to the sorting condition to acquire data related to the result of the first sorting process. The data related to the result of the first sorting process includes profile data related to the relationship between the sorting operation execution timing and the sorting success rate (recovery). The profile data may be acquired as follows, for example.

In the present specification, the sorting operation execution timing is a timing related to how much time elapses from the time when the sorting target particle passes through the position irradiated with light for the sorting determination to execute the sorting operation (for example, driving of the sorting unit) for sorting the sorting target particle. Regarding the sorting operation execution timing, an optimal timing considered to be optimal may be specified in advance. As the optimal timing, for example, an optimal timing considered to be optimal in the sorting calibration process performed at any time point before the first sorting process is executed may be specified.

The sorting operation execution timing also indicates how much the timing is delayed from the optimal timing, and thus it is also referred to as a delay time. That is, the optimal timing corresponds to the delay time 0 us, for example, the sorting operation execution timing 10 $\mu$s after the optimal timing is the delay time 10 us, and the sorting operation execution timing 10 $\mu$s before the optimal timing is the delay time -10 $\mu$s.

In the present specification, the sorting success rate is the number of successfully sorted particles per unit number of sorting attempts.

Here, the number of sorting attempts is the number of times of executing the sorting process by the sorting unit, and may be, for example, the number of times of driving of the piezo actuator. For example, the information processing unit 103 may be configured to count the number of times.

Furthermore, the number of successfully sorted particles may be the number of particles that have passed through the detection region 180. The biological sample sorting device 100 counts the number of successfully sorted particles using the second light irradiation unit 201 and the second detection unit 202. More specifically, as described above, the second light irradiation unit 201 irradiates the detection region 180 with light. When the sorted particle passes through the detection region 180, the sorted biological particle is irradiated with the light. The second detection unit 202 detects light generated by the light irradiation. The second detection unit 202 transmits information regarding the detected light to the information processing unit 103. The information processing unit 103 can count the number of particles passing through the detection region 180 on the basis of the information and can handle the counted number as the number of successfully sorted particles.

The biological sample sorting device 100 may specify the sorting success rate on the basis of the number of sorting attempts and the number of successfully sorted particles acquired as described above.

Note that the sorting success rate may be represented by the number of successfully sorted particles per unit number of sorting attempts as described above, or may be represented by a ratio such as (number of successfully sorted particles)/(number of sorting attempts), for example.

The biological particle sorting device 100 executes the biological particle sorting process at each of two or more sorting operation execution timings in the first sorting process. Then, the biological particle sorting device 100 acquires a sorting success rate at each sorting operation execution timing.

The two or more sorting operation execution timings may include one or more timings after the optimal timing and one or more timings before the optimal timing. Preferably, the two or more sorting operation execution timings may be set so that profile data to be described later can be derived.

The two or more sorting operation execution timings include, for example, five or more time points, preferably 10 or more time points, and more preferably 15 or more time points after the optimal timing. The number of sorting operation execution timings after the optimal timing may be, for example, 100 or less, 80 or less, 60 or less, or 40 or less.

Furthermore, the two or more sorting operation execution timings include, for example, five or more time points, preferably 10 or more time points, and more preferably 15 or more time points before the optimal timing. The number of sorting operation execution timings before the optimal timing may be, for example, 100 or less, 80 or less, 60 or less, or 40 or less.

By acquiring the sorting success rate (recovery) at more sorting operation execution timings as described above, better profile data can be acquired. In addition, in order to reduce the number of particles used for creating profile data, it is desirable that the number of sorting operation execution timings is limited to some extent.

As described above, in a preferred embodiment of the present disclosure, the biological particle sorting device 100 executes the biological particle sorting process at each of two or more sorting operation execution timings in the first sorting process, and acquires the sorting success rate (recovery) at each sorting operation execution timing.

By plotting the sorting success rate with respect to the sorting operation execution timing, profile data related to the relationship between the sorting operation execution timing and the sorting success rate can be obtained. An example of the profile data is as illustrated in Fig. 10. In the drawing, the horizontal axis represents the sorting operation execution timing (delay time), and the vertical axis represents the sorting success rate (recovery). As illustrated in the drawing, profile data can be obtained in which the sorting success rate is the highest near the optimal timing (delay time 0), and the sorting success rate decreases as it is separated from the optimal timing.

In this manner, the biological particle sorting device 100 plots the sorting success rate with respect to the sorting operation execution timing to derive the profile data.

(Step S102: Approximation processing)

In step S102, the biological particle sorting device 100 performs approximation processing of the profile data derived in step S101. The biological particle sorting device 100 derives an approximate model of the relationship between the sorting operation execution timing and the sorting success rate by the approximation processing. Deriving the approximate model is useful for setting an appropriate sorting condition, and is particularly useful, for example, in a case where the target sorting parameter desired by the user is an extremely high or low value. This is described in more detail below.

As described in (4) above, the user may wish to set the purity or the sorting efficiency as the target sorting parameter. The target sorting parameters such as purity and sorting efficiency have a predetermined relationship with the sorting success rate. Such a relationship is based on the configuration of the biological particle sorting device, particularly the configuration of the sorting unit, and the relationship can be acquired in advance.

For example, regarding the biological particle sorting device 100 that performs sorting by the chip 150 described above, the purity and the sorting success rate have a relationship as illustrated in Fig. 11A. As illustrated in Fig. 11A, for example, the sorting success rate decreases as the purity of the sorting target particle to be sorted is increased, and conversely, the sorting success rate increases as the purity is decreased.

As illustrated in Fig. 11B, in a case where the sorting process is performed so that the purity of the sorting target particles is equal to or more than 97% for a sample having a sorting target particle content ratio of 1%, the sorting success rate needs to be set to 30% or less. Then, in order to set the sorting success rate to 30% or less, as illustrated in Fig. 10, it is necessary to set the guard time so that the negative delay time is equal to or less than T1 and the positive delay time is equal to or more than T2.

The sorting efficiency (Efficiency) has a trade-off relationship with the purity, and thus has a relationship with the sorting success rate. Thus, it is possible to specify the sorting success rate to be set for performing the sorting process that achieves specific sorting efficiency from the relationship. Then, as in the case of the purity, the guard time to be set to the specified sorting success rate can be specified.

In the profile data, in a case where the sorting success rate is about 30% as described above, the relationship between the sorting success rate and the delay time is strong, and the deviation from the actual measurement result is small. However, in a case where the sorting success rate is equal to or less than about 10%, the variation in the measurement result becomes large, and the profile data may not accurately reflect the relationship between the sorting success rate and the delay time.

Here, in a case where the sorting process is performed so that the purity of the sorting target particle is, for example, equal to or more than 99%, the sorting success rate needs to be set to 10% or less from the relationship illustrated in Fig. 11B. In a case where the sorting success rate is 10% or less, the variation in the measurement results is large as described above. Thus, in a case where such an extremely high purity sorting result is required, if the guard time is set on the basis of the profile data, an intended sorting result may not be obtained. This also applies to the sorting efficiency.

The present inventors have found that an appropriate guard time can be set by using an approximate model derived by performing approximation processing.

An example of this approximation processing will be described below with reference to Fig. 21. The drawing is a diagram for explaining an example of approximation processing for the profile data illustrated in Fig. 10 described above. In Fig. 21, the profile data is approximated to a trapezoidal shape. The upper base of the trapezoid has the length of a width of 6 $\mu$s (3 $\mu$s on the negative side and 3 us on the positive side) centered on the delay time of 0 us, and is disposed at a position where the sorting success rate is 95%. Here, 30% is adopted as the preset sorting success rate. The delay time in a case where the sorting success rate is 30% is specified from the profile data. There are two delay times in the profile data in a case where the sorting success rate is 30%, and these delay times are indicated by T1 and T2.

Formula 1 (quadratic function) representing a straight line of a slope on the left side of the trapezoid is specified by a straight line connecting the position of T1 and the left end of the upper base. The straight line represented by Formula 1 is from the left end of the upper base to a position where the sorting success rate is 10%.

Formula 2 (quadratic function) representing a straight line of a slope on the right side of the trapezoid is specified by a straight line connecting the position T2 and the right end of the upper base. The straight line represented by Formula 2 is from the right end of the upper base to a position where the sorting success rate is 100.

In the present disclosure, these two formulas are included in the approximate model.

The approximate model specified in this manner (particularly, Formulas 1 and 2) is suitable for specifying the delay time corresponding to the sorting success rate. These two expressions 1 and 2 make it possible to specify an appropriate delay time even with an extreme sorting success rate. By setting the specified delay time as the guard time, it is possible to obtain a required sorting result.

As described above, in a preferred embodiment, the biological particle sorting device of the present disclosure generates an approximate model of the profile data. The approximate model may include an approximate formula representing a change (particularly, an increase) in the sorting success rate from the delay time on the negative side to the vicinity of the delay time 0 and an approximate formula representing a change (particularly, a decrease) in the sorting success rate from the vicinity of the delay time 0 to the positive side delay time. These approximate formulas are obtained by linear approximation as described above, but are not limited thereto, and may be polynomial approximation, for example. Furthermore, the approximate model is not necessarily specified as a mathematical expression. Two or more pieces of coordinate data on the profile data for deriving each formula may be used as an approximate model.

That is, in the present disclosure, the biological particle sorting device 100 can execute, for example, the approximation processing on the basis of a preset sorting success rate and a sorting operation execution timing corresponding to the preset sorting success rate. The preset sorting success rate may be, for example, 15% or more, 20% or more, or 25% or more. In addition, the preset sorting success rate may be, for example, 100% or less, 99% or less, or 95% or less. Adopting such a sorting success rate as the preset sorting success rate is useful for generating an appropriate approximate model, and thus it is possible to set a guard time suitable for achieving an extreme target purity or target sorting efficiency described above.

(Step S103: Adjustment processing of sorting condition in second sorting process)

In step S103, the biological particle sorting device 100 adjusts the sorting condition in a second sorting process described later using the approximate model. In particular, the biological particle sorting device 100 adjusts the sorting condition in the second sorting process on the basis of the approximate model and the target sorting parameter input by the user.

As described above with reference to Figs. 11A and 11B, the sorting success rate and the target sorting parameter (for example, purity or sorting efficiency) have a predetermined relationship, and the relationship is held in the biological particle sorting device 100 in advance. As described above, the biological particle sorting device 100 holds in advance data (hereinafter also referred to as "correspondence relationship data") indicating a correspondence relationship between the sorting success rate and the sorting parameter. The biological particle sorting device 100 uses the correspondence relationship data in the adjustment described above.

As described in "(5-2-2) Sorting mode selection step", the biological particle sorting device 100 holds the target sorting parameter input by the user. The biological particle sorting device 100 refers to the correspondence relationship data and specifies a sorting success rate corresponding to the target sorting parameter. Then, the biological particle sorting device 100 adjusts the sorting condition in the second sorting process on the basis of the specified sorting success rate and the approximate model.

For example, a delay time corresponding to the specified sorting success rate is specified using the approximate model, and the delay time is set as the guard time in the second sorting process.

How to set the guard time in a case where the user inputs the purity of 93% as the target sorting parameter will be described below.

First, the biological particle sorting device 100 refers to the correspondence relationship data and specifies a sorting success rate corresponding to the purity of 93%. As illustrated in Fig. 11B, since the purity of 93% corresponds to the sorting success rate of 50%, the biological particle sorting device 100 specifies that the sorting success rate corresponding to the purity of 93% is 50%.

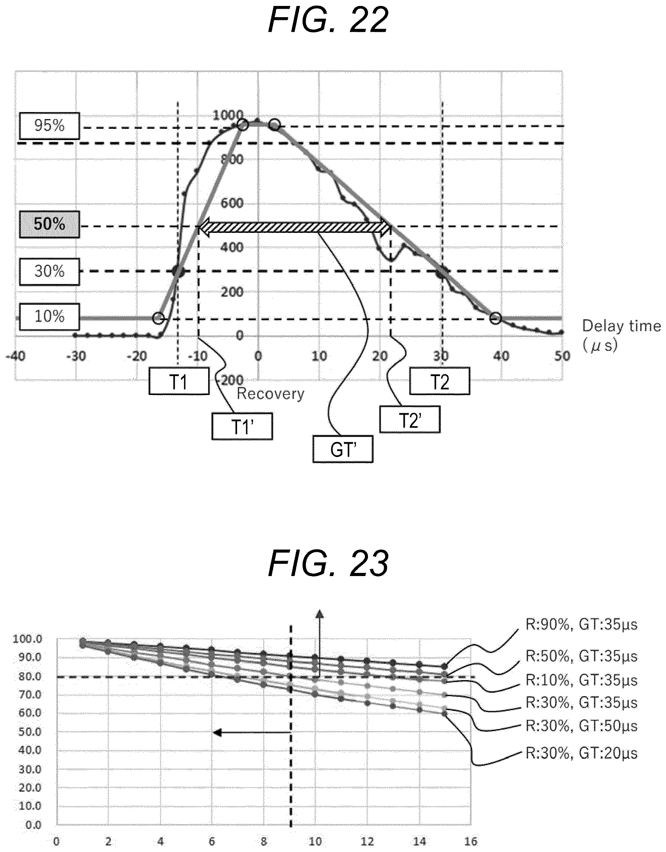

Next, the biological particle sorting device 100 refers to the approximate model to specify the delay time corresponding to the sorting success rate of 50%. As illustrated in Fig. 22 (the same approximate model as that of Fig. 21 is illustrated in the drawing), the sorting success rate of 50% corresponds to delay times T1' and T2', and thus the biological particle sorting device 100 specifies that the delay times corresponding to the sorting success rate of 50% are T1' and T2'.

Next, the biological particle sorting device 100 sets T1' and T2' as guard times. Specifically, the period from the time point T1' before the optimal timing to the time point T2' after the optimal timing is set as a guard time GT'.

In addition, the biological particle sorting device 100 may set other sorting conditions after setting the guard time. The setting of other sorting conditions may be performed so that, for example, any one or two or more of the sorting efficiency, the detection frequency, and the flow rate match the target value input by the user. These target values may be input by the user in the (5-2-2) sorting mode selection step described above, or may be input by the user in any other step.

Here, when the sorting success rate and the guard time are set, the detection frequency and the sorting efficiency in a case where the set sorting success rate and guard time are adopted have a predetermined relationship. This relationship will be described with reference to Fig. 23. The drawing is a graph illustrating the relationship between the detection frequency (EPS, unit: kEPS) and the sorting efficiency (Efficiency, unit: %). In the drawing, the relationship between the detection frequency and the sorting efficiency at various ratios (R) of sorting target particles and guard time (GT) is illustrated. As illustrated in the drawing, the sorting efficiency decreases as the detection frequency increases, and conversely, the sorting efficiency increases as the detection efficiency decreases. This relationship can be expressed by, for example, the following formula. In this formula, efficiency (%) is the sorting efficiency, EPS (kEPS) is the detection frequency, $\alpha$ (%) is the ratio of sorting target particles, and $\beta$ ($\mu$s) is the guard time.

[Math. 1]

$$\text{efficiency}=100 - \{1\text{-exp}[-\beta*1E\text{-}6 \times EPS \times (1-\alpha/100)]\} \times 100$$

In this manner, when the sorting efficiency is set, the detection frequency corresponding thereto can be calculated. On the contrary, when the detection frequency is set, the sorting efficiency corresponding thereto can be calculated. Thus, the sorting condition can be set according to the target value input by the user. Note that the flow rate is a parameter that changes in the same manner as the detection frequency. Thus, when the flow rate is set, the detection frequency can be determined accordingly. Conversely, once the detection frequency is set, the flow rate can be determined accordingly.

For example, in a case where the sorting efficiency or the detection frequency is set in, for example, the setting of the other sorting condition, the biological particle sorting device 100 can specify the flow rate so as to achieve the sorting efficiency or the detection frequency, and can execute the sorting process at the specified flow rate. More specifically, the following control may be executed.

In a case where the flow rate is specified, the biological particle sorting device 100 executes the subsequent sorting process at the specified flow rate.

In a case where the detection frequency is designated, the biological particle sorting device 100 specifies the flow rate at which the designated detection frequency is achieved (for example, specifies a flow rate that becomes the designated detection frequency by varying the flow rate), and then executes the subsequent sorting process at the specified flow rate.

In a case where the sorting efficiency is designated, the biological particle sorting device 100 specifies the detection frequency corresponding to the designated sorting efficiency using the above formula, specifies the flow rate corresponding to the detection frequency as in the case where the detection frequency is designated, and executes the subsequent sorting process at the specified flow rate.

(Modification 1)

The manner of setting the guard time in a case where the user inputs the purity as the target sorting parameter has been described above, but the target sorting parameter may be the sorting efficiency. In a case where the sorting efficiency is input as the target sorting parameter, since the sorting efficiency also changes depending on the flow rate of the sample liquid, it is preferable to perform the first sorting process in step S101 at the flow rate of the sample liquid set in advance in the biological particle sorting device 100. Then, in step S103, the guard time or the flow rate (sample flow amount) or both are adjusted so as to achieve the input sorting efficiency. The sorting efficiency may be calculated in real time and the biological particle sorting device 100 may present the calculated value to the user in real time. Then, the user can adjust the guard time and/or the flow rate with reference to the presented sorting efficiency. In addition, even in a case where the sorting efficiency is input as the target sorting parameter, another sorting condition described above with respect to step S103 may be set. For example, the biological particle sorting device 100 may specify the flow rate so as to achieve the sorting efficiency, and then execute the sorting process at the specified flow rate. More specifically, the following control may be executed. In a case where the flow rate is designated as another sorting condition, the biological particle sorting device 100 executes the subsequent sorting process at the designated flow rate.

In a case where the detection frequency is designated as another sorting condition, the biological particle sorting device 100 specifies the flow rate at which the designated detection frequency is achieved (for example, specifies a flow rate that becomes the designated detection frequency by varying the flow rate), and then executes the subsequent sorting process at the specified flow rate.

In addition, regarding step S103, it has been described above that the detection frequency can be calculated from the sorting efficiency using Formula 1, but the biological particle sorting device 100 may specify other sorting conditions such as the detection frequency by other methods. Since the biological particle sorting device 100 can measure the sorting efficiency, the biological particle sorting device 100 may measure, for example, the sorting efficiency in one or more cases where the guard time or the flow rate is changed, and then set other sorting conditions on the basis of the measurement result. That is, the biological particle sorting device 100 can also automatically feedback-control other sorting conditions on the basis of the measured sorting efficiency.

(Modification 2)

The manner of setting the guard time in a case where the user inputs the purity as the target sorting parameter has been described above, but the guard time may not be changed in step S103. For example, in step S103, other sorting conditions may be set without executing the setting of the guard time described above. In addition, the flow rate of the sample liquid may not be changed.

(Step S104: Second Sorting Process)

The biological particle sorting device 100 executes the sorting process using the sorting condition set in step S104 described above. That is, the sorting process may be a sorting process executed on the basis of data related to a result of the first sorting process and a target sorting parameter input by the user.

Data related to a result of the first sorting process may include profile data related to a relationship between a sorting operation execution timing and a sorting success rate. In particular, the data related to the result of the first sorting process may include the approximate model obtained by performing the above-described approximation processing on the profile data.

Note that the second sorting process may be performed similarly to the first sorting process except that the sorting conditions are different.

In a case where the parameter adjustable mode is selected, the biological particle sorting device 100 of the present disclosure can execute the sorting process according to the user's needs by executing the processing of steps S101 to S104 described above.

(5-2-3-2) Sorting process in case where purity mode is selected

In the purity mode, the sorting process is performed with priority given to the purity of the sorting target particle in the sorted particles. That is, in a case where the purity mode is selected as the sorting mode, the biological particle sorting device 100 executes the sorting process so that a predetermined purity is achieved. The predetermined purity may be purity set by the user, or may be purity held in advance by the biological particle sorting device 100.

The sorting process in the purity mode may be performed similarly to the sorting process described above in (5-2-3-1).

As described above, the purity and the sorting success rate have a predetermined relationship. Thus, in a case where the purity mode is selected as the sorting mode, the biological particle sorting device 100 refers to the relationship to specify the sorting success rate corresponding to the predetermined purity. Then, a delay time is specified so that the sorting success rate is achieved, and the guard time is set on the basis of the delay time.

(5-2-3-3) Sorting process in case where yield mode is selected

In the yield mode, the sorting process is performed with priority given to the yield of the sorting target particle. That is, in a case where the yield mode is selected as the sorting mode, the biological particle sorting device 100 executes the sorting process so that a predetermined yield is achieved. The predetermined yield may be a yield held in advance by the biological particle sorting device 100.

The sorting process in the yield mode may be performed similarly to the sorting process described above in (5-2-3-1).

Note that, in a case where the sorting efficiency prioritized mode described in the above (5-2-2) is selected, for example, processing may be executed in the same manner as in the yield mode except that abort processing (particularly, long act abort processing) is not performed. The long act abort process is a process of abort in a case where two or more particles are present at a short distance at the time of detection of the particles (for example, in a case where two or more particles are present at a distance equal to or less than a predetermined value), and this is because there is a risk that appropriate signal measurement is not performed in this case. Thus, in the sorting efficiency prioritized mode, the sorting efficiency can be further enhanced.

As described above, the biological particle sorting device 100 may have a sorting efficiency prioritized mode in addition to the parameter adjustable mode, the purity mode, and the yield mode. Then, the biological particle sorting device 100 may be configured not to execute the long act abort process in the sorting efficiency prioritized mode while executing the long act abort process in the yield mode.

The yield adjustment can be carried out by adjusting the sorting efficiency. Similarly to the purity, the sorting efficiency has a predetermined relationship with the sorting success rate. In a case where the yield mode is selected as the sorting mode, the biological particle sorting device 100 refers to the relationship to specify the sorting efficiency corresponding to a predetermined yield and the sorting success rate corresponding to the sorting efficiency. Then, a delay time is specified so that the sorting success rate is achieved, and the guard time is set on the basis of the delay time.

(5-2-3-4) Change of sorting parameter at any timing during sorting step

In the middle of the sorting step S13, the data indicating the status of sorting is displayed as described in (5-1) above. Furthermore, in response to selection of the data expansion button 315 on the screen 300, data related to other gates is also displayed. The biological particle sorting device 100 may be configured to update these pieces of data in real time.

The user who confirms the data updated in real time in this manner may desire to change the sorting condition in the middle of the sorting step. For example, in a case where it takes more time than expected, it may be desired to shorten the time required for the sorting process by changing the flow rate.

The biological particle sorting device 100 may be configured to be able to change the sorting condition while the sorting process is being executed or after the sorting process is completed.

For example, the biological particle sorting device 100 displays the sorting mode selection screen (parameter reception screen) 400 described above in response to the user selecting the sort setting button in the screen 300 at any time when the sorting step is being executed. Note that, in the middle of this sorting step, since the sorting mode and the target sorting parameter are set, the sorting mode selection screen in which these are selected may be displayed as illustrated in Fig. 19G.

As illustrated in Fig. 19H, the user inputs a desired flow rate in the input box 408 (a state in which 60 is input is illustrated in the drawing), and then selects the OK button. In response to this, the biological particle sorting device 100 changes the supply rate of the sample liquid.

In addition, the target sorting parameter changed in the middle of the sorting step is not limited to the flow rate, and may be the detection frequency or the sorting efficiency, or may be the guard time threshold. In addition, the target sorting parameter changed in the middle of the sorting step may be purity or sorting efficiency. The biological particle sorting device 100 can execute step S103 described above after receiving such a change in the target sorting parameter. Then, after the adjustment of the sorting parameter, step S104 may be executed. Thus, a sorting result according to the user's needs can be obtained.

(5-2-3-5) Sorting process of plurality of kinds of sorting target particles

The biological particle sorting device 100 of the present disclosure may sort one kind of sorting target particles or may sort a plurality of kinds of sorting target particles. The biological particle sorting device 100 of the present disclosure may sort the plurality of kinds of sorting target particles at a predetermined ratio. In a case where a plurality of kinds of sorting target particles is sorted at a predetermined ratio, the biological particle sorting device 100 preferably changes the guard time set for each sorting target particle in real time. This makes it easy to achieve the predetermined ratio. In order to change the guard time in real time, the biological particle sorting device 100 can execute step S103 described above in real time according to, for example, the sorting efficiency or the number of sorting executions per unit time for each sorting target particle. Thus, an appropriate guard time for achieving the predetermined ratio is set.

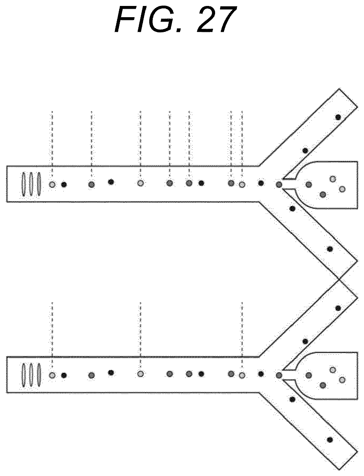

For example, as illustrated in Fig. 27, it is assumed a case where two types of sorting target particles, which are dark gray particles and light gray particles, are sorted from a sample containing black particles (non-sorting target particles), dark gray particles (first sorting target particles), and light gray particles (second sorting target particles). In this case, as illustrated in the upper part of Fig. 27, at the beginning of the sorting process, both the dark gray particles and the light gray particles are sorted.

However, there is a case where it is not necessary to sort the dark gray particles as the time of the sorting process elapses. In this case, as illustrated in the lower part of Fig. 27, the dark gray particles are not the sorting target particles, and only the light gray particles are the sorting target particles. Thus, the ratio of the sorting target particles changes, and accordingly, the sorting efficiency also changes. Accordingly, the biological particle sorting device 100 sets the guard time by performing the processing in step S103 according to the change in the sorting efficiency.

By changing the guard time in this manner, it is possible to efficiently sort a plurality of kinds of sorting target particles at a predetermined ratio.

Note that, as a method for sorting a plurality of kinds of sorting target particles at a predetermined ratio, a method described in Japanese Patent Application Laid-Open No. 2020-076736 may be adopted.

(6) Example of sorting operation flow

The sorting process according to the present disclosure may be executed in various sorting operations. An example of an aspect in which the sorting process is executed will be described below.

It is assumed that the biological particle sorting device is used, for example, for producing a cell therapeutic agent. In the manufacturing, for example, it is assumed that the gate setting is performed by a user who is accustomed to using various measurement data (for example, a researcher or a developer having the highly specialized scientific knowledge), and the actual sorting operation is performed by a user who is not accustomed to using the measurement data as compared with the user (for example, a worker or an operator in a cell therapeutic agent manufacturing factory).

It is desirable that the biological particle sorting device has a mode according to the usage mode of each user so that each of the two types of users can easily use the biological particle sorting device. Therefore, in one embodiment, the biological particle sorting device of the present disclosure may have a first display mode in which an input of operation control data related to the biological particle sorting process is received, and a second display mode in which a processing execution operation screen is displayed.

The first display mode may be used as a mode used by a user who is accustomed to using the measurement data, and the second display mode may be used as a mode used by a user who is not accustomed to using the measurement data.

Since the biological particle sorting device according to the present disclosure has two display modes as described above, for example, a researcher or a developer can input operation control data using the first display mode, and a worker or an operator can execute the sorting process by the biological particle sorting device via a processing execution operation screen in the second mode. Thus, it is possible to provide a work environment suitable for use by each user.

For example, in the first display mode, the researcher or the developer inputs the operation control data (for example, work procedure information or the like) related to a sorting process operation to be executed by the worker or the operator via the processing condition setting screen. Then, in the second display mode, a processing execution operation screen generated on the basis of the operation control data is presented to the operator. Thus, the researcher or the developer can easily create an instruction for the operator such as a correct work procedure and/or cautions for each sorting process. Then, the operator can execute an appropriate sorting process according to a designated work procedure and referring to cautions according to an instruction displayed on the processing execution operation screen.

The first display mode may also be referred to as a sorting process condition setting mode, or may also be referred to as a setting mode, a process development mode, a PD mode, or the like. Furthermore, the second display mode may also be referred to as a process execution operating mode, or may also be referred to as an operating mode, an operation mode, an OP mode, or the like.

In the present specification, a user who operates the biological particle sorting device in the first display mode is also referred to as a "first user", and a user who operates the biological particle sorting device in the second display mode is also referred to as a "second user".

The first user may be a user who designs and/or develops the sorting process to be executed in the second display mode. The first user is, for example, the above-described researcher or developer. The second user may be a user who operates the biological particle sorting device according to instructions input in the first display mode to execute the sorting process. The second user is, for example, the operator or the worker described above.

Hereinafter, an example of processing executed by the biological particle sorting device 100 in the first display mode and the second display mode will be described.

(6-1) Example of processing in first display mode

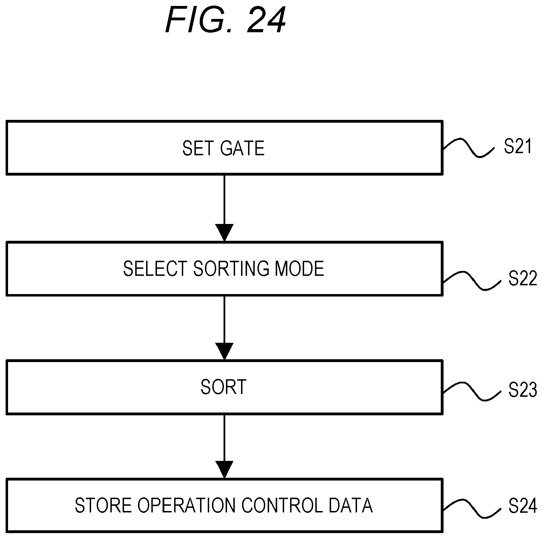

An example of processing in the first display mode will be described below with reference to Fig. 24. The drawing is an example of a flowchart of the processing.

A gate setting step in step S21, a sorting mode selection step in step S22, and a sorting step in step S23 in the drawing may be executed similarly to steps S11, S12, and S13 described above in (5-2-1) to (5-2-3). That is, the description regarding steps S11, S12, and S13 applies to steps S21, S22, and S23.

Furthermore, in the gate setting step of step S21, the biological particle sorting device 100 may be configured to receive, for each gate, input of data related to the order of display in the second display mode, data related to whether or not to be displayed in the second display mode, or both of these. The display in the second display mode is controlled by these pieces of data, so that the second user can accurately confirm the measurement data.

In addition, in the gate setting step, the biological particle sorting device 100 may be configured to receive, for each gate, an input of instruction data (an item to be confirmed for the measurement data, a method of adjusting the gate, or the like) to the second user in the second display mode. With the data, the second user can accurately confirm the measurement data or accurately adjust the gate in the second display mode.

The gate information set in step S21, the data related to the order described above, the data related to the presence or absence of display, and the instruction data are treated as operation control data to be described later.

Furthermore, the sorting mode selected in the sorting mode selection step of step S22 (that is, data specifying the selected sorting mode) and the input target sorting parameter are also treated as operation control data to be described later.

Furthermore, the guard time and other sorting conditions set in the sorting mode in step S23 are also treated as operation control data to be described later.

When the sorting process in step S23 is completed, the biological particle sorting device 100 outputs the result of the sorting process. The user confirms the result of the processing. For example, in response to selection of a confirmation button displayed on the display unit, the biological particle sorting device 100 stores the operation control data. As described above, the operation control data may include: the gate information, the data related to the order described above, the data related to the presence or absence of display, and the instruction data; the sorting mode and the target sorting parameter; and the guard time and other sorting conditions.

In addition, the measurement data (plot data and the like) and sorting process result data (number, purity, time, and the like of sorted particles) may be stored as the operation control data for the second user to refer to in the second display mode to be described later.

When the storage of the operation control data is finished, the operation of the biological particle sorting device in the first display mode may be finished. Note that, in a case where the result of the sorting process in step S23 is different from that desired by the user, the process may be restarted from any one of steps S21 to 23 again.

(6-2) Example of processing in second display mode

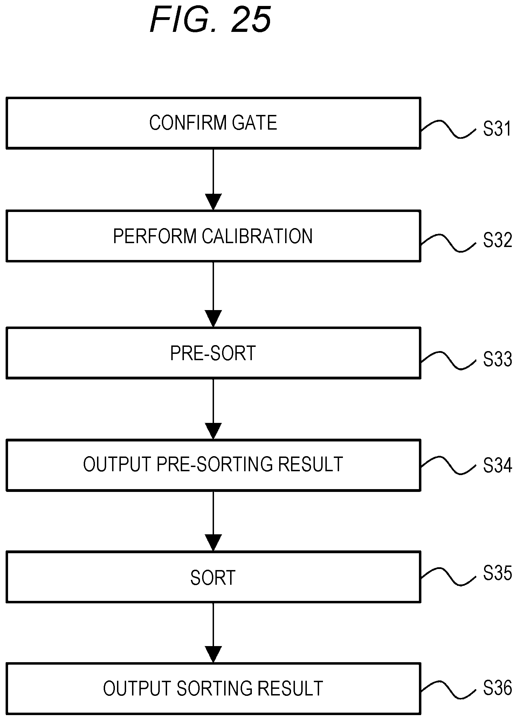

An example of processing in the second display mode will be described below with reference to Fig. 25. The drawing is an example of a flowchart of the processing.

In a gate confirmation step of step S31 illustrated in the drawing, the biological particle sorting device 100 causes the display unit to display a gate display screen that displays a gate set for specifying the sorting target particle on the basis of the operation control data set in the first display mode.

The operation control data particularly includes the gate information described in (6-1) above. The operation control data may further include at least one of the data related to the order described above, the data related to the presence or absence of display, or the instruction data. By displaying the gate on the basis of the operation control data, it is possible to accurately notify the second user of the sorting process intended by the first user.

In addition, the gate display screen may have a confirmation button for proceeding the processing to step S32. The biological particle sorting device 100 advances the processing to step S32 in response to the selection of the confirmation button by the user.

In a sort calibration step of step S32, the biological particle sorting device 100 executes sort calibration on the basis of the operation control data set in the first display mode. The operation control data referred to in this step may particularly include the sorting mode selected in (6-1) above and the target sorting parameter set in the selected sorting mode.

The biological particle sorting device 100 sets sorting conditions such as the guard time so that the target sorting parameter is achieved with reference to the operation control data.

For example, the biological particle sorting device 100 sets, for example, the guard time so that a purity or a yield (or sorting efficiency) set in the first display mode is achieved.

In addition, the biological particle sorting device 100 can set, for example, the flow rate so that the detection frequency or the sorting efficiency set in the first display mode is achieved. Note that, in a case where the flow rate is set in the first display mode, the biological particle sorting device 100 may not perform setting regarding the detection frequency or the sorting efficiency.

In a pre-sorting step in step S33, the biological particle sorting device 100 executes the sorting process on a part of the biological sample under various sorting conditions set in step S32. Then, the biological particle sorting device 100 acquires sorting result data related to the result of the sorting process. The sorting result data may include, for example, at least one of the detection frequency actually measured in the sorting process, the number of recovered particles, or the time required for the sorting process.

Steps S32 and S33 may be continuously executed. That is, in response to selection of the confirmation button in step S31, the biological particle sorting device 100 may continuously perform the sort calibration step and the pre-sorting step in step S32. In principle, in the second display mode, since the sorting process is performed according to the sorting condition set in the first display mode, detailed confirmation of the implementation status of these steps or adjustment of the sorting parameter in these steps may not be performed.

In a pre-sorting result output step in step S34, the biological particle sorting device 100 displays a pre-sorting result on the display unit on the basis of the sorting result data acquired in step S33. By displaying the pre-sorting result, the second user can confirm the pre-sorting result, and for example, can confirm whether or not the sorting result instructed by the first user can be obtained.

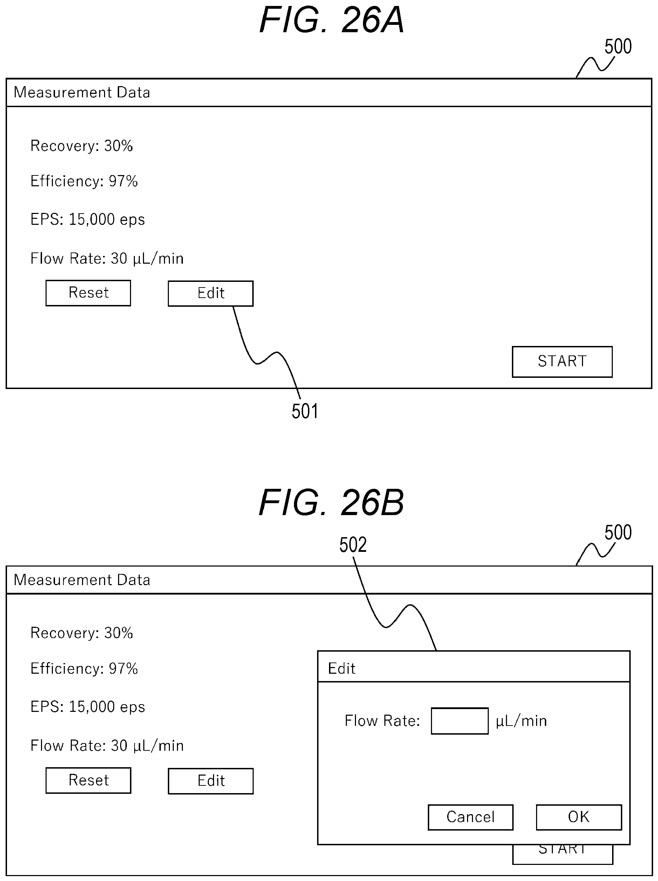

Fig. 26A illustrates an example of a screen displaying the pre-sorting result. As illustrated in the drawing, the screen 500 may display various data of the pre-sorting result. In addition to the data illustrated in the drawing, for example, the number of recovered particles and the time required for the sorting process may be displayed as the data.

In addition, the screen may be configured to be able to adjust the sorting condition. For example, a window for receiving input of any sorting parameter may be displayed in response to the user selecting the Edit button 502 illustrated in the drawing.

Fig. 26B illustrates an example of a state in which a window 502 for receiving a change in the flow rate is displayed in response to selection of the Edit button 502.

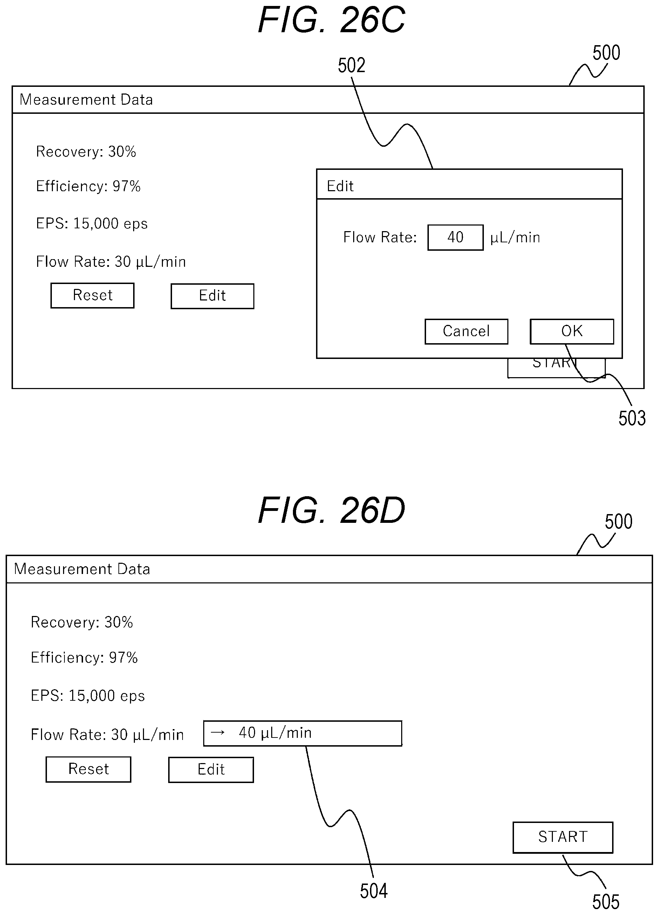

As illustrated in Fig. 26C, the user inputs the changed flow rate "40" into the window 502, and then selects the OK button 503. In response to the selection, the window 502 is closed.

When the window 502 is closed, the changed flow rate 400 is displayed on the screen 500 as illustrated in Fig. 26D. The user confirms the change. After the confirmation, the user selects the button 505 to start the sorting process in step S35. In response to the selection of the button 505, the biological particle sorting device 100 advances the processing to step S35.

For example, in a case where the time required for the sorting process is longer than expected, the biological particle sorting device 100 can shorten the time required for the sorting process in step S35 by receiving adjustment to increase the detection frequency or the flow rate.

In step S35, the biological particle sorting device 100 executes the sorting process. The sorting process may be performed in accordance with the sorting condition included in the operation control data, or may be performed in accordance with the sorting condition adjusted in step S35. When the sorting process is completed, the biological particle sorting device 100 advances the process to step S36.

In step S36, the biological particle sorting device 100 may display the result of the sorting process in step S35 on, for example, a display unit. In addition, in step S36, the sorted biological particles are recovered in, for example, a predetermined container, and thus the biological particle sorting device 100 may display a screen prompting to take out the container from the biological particle sorting device on the display unit.

By executing the processes described in (6-1) and (6-2) above, the second user can accurately execute the sorting process reflecting the intention of the first user.

2. Second embodiment (biological particle sorting method)

The present disclosure also provides a biological particle sorting method. The biological particle sorting method may include executing a sorting process of sorting a sorting target particle on the basis of light generated by irradiating the biological particle flowing through the flow channel with light. The sorting process may be executed on the basis of a sorting condition of the sorting target particles and a sorting mode selected from among a plurality of sorting modes. Here, the plurality of sorting modes may include a parameter adjustable mode in which the sorting process is executed on the basis of a target sorting parameter input by a user.

The biological particle sorting method includes, for example, the sorting step described in (5-2-3) above. The biological particle sorting method may further include the gate setting step described in the above (5-2-1), the sorting mode selection step described in the above (5-2-2), or both of these steps. The description regarding the sorting process described in the 1. above including these steps also applies to the present embodiment. For example, the biological particle sorting method may be performed by the biological particle sorting device described in 1. above.

3. Third embodiment (program)

The present disclosure also provides a program for causing a biological particle sorting device to perform a biological particle sorting process. The program may be a program for causing the biological particle sorting device to execute the biological particle sorting method according to the present disclosure.

The program may be a program for causing a biological particle sorting device to execute a sorting process on the basis of a sorting condition of a sorting target particle and a target sorting parameter input by a user, and may be, for example, a program for causing the biological particle sorting device to execute the sorting step described in (5-2-3) above. Moreover, the program may be a program for causing the biological particle sorting device to execute the gate setting step described in the above (5-2-1), the sorting mode selection step described in the above (5-2-2), or both of these steps. The description regarding the sorting process described in the 1. above including these steps also applies to the present embodiment. For example, the program may be for causing the biological particle sorting device described in 1. to execute a sorting process. The program according to the present disclosure may be stored in, for example, an information processing unit included in the biological particle sorting device. The program according to the present disclosure may be stored in an information recording medium or may be configured to be available online. The information recording medium may be, for example, an optical recording medium such as a DVD or a CD, or may be a magnetic recording medium or a flash memory.

Note that the present disclosure can also have the following configurations.

[1] A biological particle sorting device, including:

a sorting unit that sorts a sorting target particle on the basis of light generated by irradiating a biological particle flowing through a flow channel with light, in which
the biological particle sorting device is configured to execute a sorting process on the basis of a sorting condition of a sorting target particle and a sorting mode selected from among a plurality of sorting modes, and
the plurality of sorting modes includes at least a parameter adjustable mode in which a sorting process is executed on the basis of a target sorting parameter input by a user.

[2] The biological particle sorting device according to [1], in which

the plurality of sorting modes includes at least
a purity mode in which a sorting process is executed in such a manner that purity of sorting target particles becomes a predetermined target value, a yield mode in which a sorting process is executed in such a manner that a yield of sorting target particles becomes a predetermined target value, and the parameter adjustable mode.

[3] The biological particle sorting device according to [1] or [2], in which the biological particle sorting device is configured to receive, as the target sorting parameter, an input of at least one of a parameter related to a sorting result of sorting target particles or a parameter related to a flow amount of biological particles.
[4] The biological particle sorting device according to [3], in which the parameter related to the sorting result includes purity of sorting target particles, sorting efficiency of sorting target particles, or both of the purity of sorting target particles and the sorting efficiency.
[5] The biological particle sorting device according to [3], in which the parameter related to the flow amount of the biological particles includes a detection frequency of biological particles subjected to sorting determination, a flow amount of a sample flowing through the flow channel, or both of the detection frequency and the flow amount.

[6] The biological particle sorting device according to any one of [1] to [5], in which the sorting condition includes gate information.

[7] The biological particle sorting device according to [6], in which the sorting condition further includes a preset purity condition or sorting efficiency condition.

[8] The biological particle sorting device according to any one of [1] to [7], in which

in the parameter adjustable mode, the biological particle sorting device is further configured to execute

a first sorting process of sorting a biological particle according to a preset sorting condition, and

a second sorting process based on data related to a result of the first sorting process and a target sorting parameter input by a user.

[9] The biological particle sorting device according to any one of [1] to [8], in which data related to a result of the first sorting process includes profile data related to a relationship between a sorting operation execution timing and a sorting success rate.

[10] The biological particle sorting device according to [9], in which the biological particle sorting device is configured to execute approximation processing of the profile data.

[11] The biological particle sorting device according to [10], in which the biological particle sorting device executes the approximation processing on the basis of a preset sorting success rate and a sorting operation execution timing corresponding to the preset sorting success rate.

[12] The biological particle sorting device according to [10] or [11], in which

the biological particle sorting device

derives an approximate model of the relationship between the sorting operation execution timing and the sorting success rate by the approximation processing, and

adjusts a sorting condition in the second sorting process on the basis of the approximate model and a target sorting parameter input by a user.

[13] The biological particle sorting device according to [12], in which

the biological particle sorting device holds in advance data indicating a correspondence relationship between a sorting success rate and a sorting parameter, and

the biological particle sorting device

specifies a sorting success rate corresponding to the target sorting parameter input by the user by referring to the data indicating the correspondence relationship, and

adjusts a sorting condition in the second sorting process on the basis of the specified sorting success rate and the approximate model.

[14] The biological particle sorting device according to [12] or [13], in which the biological particle sorting device sets a guard time in the second sorting process in adjustment of a sorting condition in the second sorting process.

[15] The biological particle sorting device according to [14], in which the biological particle sorting device adjusts one or more sorting parameters on the basis of the set guard time in the adjustment of the sorting condition in the second sorting process.

[16] The biological particle sorting device according to any one of [8] to [15], in which the biological particle sorting device is configured to be capable of displaying a parameter reception screen that receives an input of a target sorting parameter.

[17] The biological particle sorting device according to [16], in which

the biological particle sorting device is configured to be capable of displaying a processing condition setting screen that receives an input of gate information for specifying a sorting target particle, and

the biological particle sorting device displays a parameter reception screen in response to selection of a predetermined button in the processing condition setting screen.

[18] The biological particle sorting device according to [17], in which the biological particle sorting device displays the parameter reception screen in response to selection of a predetermined button while the sorting process is being executed or after the sorting process is completed.

[19] The biological particle sorting device according to any one of [16] to [18], in which the biological particle sorting device has a first display mode in which an input of operation control data related to a biological particle sorting process is received, and a second display mode in which a processing execution operation screen is displayed.

[20] The biological particle sorting device according to [19], in which the biological particle sorting device is configured to be capable of receiving an input of a target sorting parameter in any one or both of the first display mode and the second display mode.

[21] A program for causing a biological particle sorting device to execute a sorting process based on a sorting condition of a sorting target particle and a sorting mode selected from among a plurality of sorting modes including at least a parameter adjustable mode in which a sorting process is executed on the basis of a target sorting parameter input by a user.

REFERENCE SIGNS LIST

| | |
|---|---|
| 100 | Biological particle sorting device |
| 101 | First light irradiation unit |
| 102 | First detection unit |
| 103 | Information processing unit |
| 201 | Second light irradiation unit |
| 202 | Second detection unit |

**Claims**

1. A biological particle sorting device, comprising:

   a sorting unit that sorts a sorting target particle on a basis of light generated by irradiating a biological particle flowing through a flow channel with light, wherein
   the biological particle sorting device is configured to execute a sorting process on a basis of a sorting condition of a sorting target particle and a sorting mode selected from among a plurality of sorting modes, and
   the plurality of sorting modes includes at least a parameter adjustable mode in which a sorting process is executed on a basis of a target sorting parameter input by a user.

2. The biological particle sorting device according to claim 1, wherein

   the plurality of sorting modes includes at least
   a purity mode in which a sorting process is executed in such a manner that purity of sorting target particles becomes a predetermined target value,
   a yield mode in which a sorting process is executed in such a manner that a yield of sorting target particles becomes a predetermined target value, and
   the parameter adjustable mode.

3. The biological particle sorting device according to claim 1, wherein the biological particle sorting device is configured to receive, as the target sorting parameter, an input of at least one of a parameter related to a sorting result of sorting target particles or a parameter related to a flow amount of biological particles.

4. The biological particle sorting device according to claim 3, wherein the parameter related to the sorting result includes purity of sorting target particles, sorting efficiency of sorting target particles, or both of the purity of sorting target particles and the sorting efficiency.

5. The biological particle sorting device according to claim 3, wherein the parameter related to the flow amount of the biological particles includes a detection frequency of biological particles subjected to sorting determination, a flow amount of a sample flowing through the flow channel, or both of the detection frequency and the flow amount.

6. The biological particle sorting device according to claim 1, wherein the sorting condition includes gate information.

7. The biological particle sorting device according to claim 6, wherein the sorting condition further includes a preset purity condition or sorting efficiency condition.

8. The biological particle sorting device according to claim 1, wherein

in the parameter adjustable mode, the biological particle sorting device is further configured to execute
a first sorting process of sorting a biological particle according to a preset sorting condition, and
a second sorting process based on data related to a result of the first sorting process and a target sorting parameter input by a user.

9. The biological particle sorting device according to claim 1, wherein data related to a result of the first sorting process includes profile data related to a relationship between a sorting operation execution timing and a sorting success rate.

10. The biological particle sorting device according to claim 9, wherein the biological particle sorting device is configured to execute approximation processing of the profile data.

11. The biological particle sorting device according to claim 10, wherein the biological particle sorting device executes the approximation processing on a basis of a preset sorting success rate and a sorting operation execution timing corresponding to the preset sorting success rate.

12. The biological particle sorting device according to claim 10, wherein

the biological particle sorting device
derives an approximate model of the relationship between the sorting operation execution timing and the sorting success rate by the approximation processing, and
adjusts a sorting condition in the second sorting process on a basis of the approximate model and a target sorting parameter input by a user.

13. The biological particle sorting device according to claim 12, wherein

the biological particle sorting device holds in advance data indicating a correspondence relationship between a sorting success rate and a sorting parameter, and
the biological particle sorting device
specifies a sorting success rate corresponding to the target sorting parameter input by the user by referring to the data indicating the correspondence relationship, and
adjusts a sorting condition in the second sorting process on a basis of the specified sorting success rate and the approximate model.

14. The biological particle sorting device according to claim 12, wherein the biological particle sorting device sets a guard time in the second sorting process in adjustment of a sorting condition in the second sorting process.

15. The biological particle sorting device according to claim 14, wherein the biological particle sorting device adjusts one or more sorting parameters on a basis of the set guard time in the adjustment of the sorting condition in the second sorting process.

16. The biological particle sorting device according to claim 8, wherein the biological particle sorting device is configured to be capable of displaying a parameter reception screen that receives an input of a target sorting parameter.

17. The biological particle sorting device according to claim 16, wherein

the biological particle sorting device is configured to be capable of displaying a processing condition setting screen that receives an input of gate information for specifying a sorting target particle, and
the biological particle sorting device displays a parameter reception screen in response to selection of a predetermined button in the processing condition setting screen.

18. The biological particle sorting device according to claim 17, wherein the biological particle sorting device displays the parameter reception screen in response to selection of a predetermined button while the sorting process is being executed or after the sorting process is completed.

19. The biological particle sorting device according to claim 16, wherein the biological particle sorting device has a first display mode in which an input of operation control data related to a biological particle sorting process is received, and a second display mode in which a processing execution operation screen is displayed.

20. The biological particle sorting device according to claim 19, wherein the biological particle sorting device is configured to be capable of receiving an input of a target sorting parameter in any one or both of the first display mode and the second display mode.

21. A program for causing a biological particle sorting device to execute a sorting process based on a sorting condition of a sorting target particle and a sorting mode selected from among a plurality of sorting modes including at least a parameter adjustable mode in which a sorting process is executed on a basis of a target sorting parameter input by a user.

# FIG. 1

## FIG. 2

EP 4 425 148 A1

## FIG. 3

```
┌─────────────────────────────┐
│         FLOW STEP           │ ～ S1
└─────────────────────────────┘
              │
              ▼
┌─────────────────────────────┐
│     DETERMINATION STEP      │ ～ S2
└─────────────────────────────┘
              │
              ▼
┌─────────────────────────────┐
│        RECOVERY STEP        │ ～ S3
└─────────────────────────────┘
```

## FIG. 4

102 ～ DETECTION UNIT

ACTUATOR ～ 107

103 ～

SIGNAL PROCESSING UNIT ～ 104

SORTING CONTROL UNIT ～ 106

DETERMINATION UNIT ～ 105

## FIG. 5

## FIG. 6

## FIG. 7

*FIG. 8*

*FIG. 9*

## FIG. 10

## FIG. 11A

## FIG. 11B

| Recovery | Expected purity [%] |
|---|---|
| 10% | 99 |
| 20% | 98.3142 |
| 30% | 97.12528 |
| 40% | 95.39264 |
| 50% | 93.07278 |
| 60% | 90.11918 |
| 70% | 86.48202 |
| 80% | 82.10804 |
| 90% | 76.94023 |

# FIG. 12

# FIG. 13

# FIG. 14

# FIG. 15

301

| Koichiro | Error Info | ▷ FLOW | Sort STOP |

**Acquisition** | Experiment

311

📁 Experiment name
🔖 Worksheet name

Status : **Ready**

Elapsed Time : xxx

Total Events : xxx

Event Rate : xxx 🔋

▷ Start | ☐ Stop | 🔄 Restart | Record Setting

312

Recording

Elapsed Time : xxx
Recorded Count : xxx | ○ Record | Record Setting

Sorting

▷ Start | ☐ Stop | 🔧 Calibration | Sort Setting

313

Sort Statistics
Sort Gate:             A
Elapsed Time:      00:00:00
Remaining Time:    00:00:00
Sort Count:         0 / 0
Sort rate:          0 eps
Sort Efficiency:       0 %
Abort Count:       0( 0 eps)

>>

314

315

EP 4 425 148 A1

# FIG. 16

# FIG. 17

40

*FIG. 18*

# FIG. 19A

# FIG. 19B

# FIG. 19C

## FIG. 19D

403    404

**Sort Settings**

Sort Method : · Custom Purity ▼    Guard Time Threshold: [    ] %

Flow Mode : [    ▼ ]    [ OK ]  [ CANCEL ]

405    406

## FIG. 19E

404

**Sort Settings**

Sort Method : · Custom Purity ▼    Guard Time Threshold: [    ] %

Flow Mode : [    ▼ ]
· Flow Rate
· EPS
· Efficiency    [ OK ]  [ CANCEL ]

406

## FIG. 19F

404

**Sort Settings**

Sort Method : · Custom Purity ▼    Guard Time Threshold: [    ] %

Flow Mode : · Flow Rate ▼    Flow Rate [μL/min] [    ]

[ OK ]  [ CANCEL ]

406    408  407

## FIG. 19G

402                                                          404

Sort Settings

Sort Method :  [ · Custom Purity  ▼ ]     Guard Time Threshold:  [ 30 ]  %

Flow Mode :  [ · Flow Rate  ▼ ]     Flow Rate [μL/min]  [ 45 ]

[ OK ]   [ CANCEL ]

406                                                          408

## FIG. 19H

Sort Settings

Sort Method :  [ · Custom Purity  ▼ ]     Guard Time Threshold:  [ 30 ]  %

Flow Mode :  [ · Flow Rate  ▼ ]     Flow Rate [μL/min]  [ 60 ]

[ OK ]   [ CANCEL ]

408

## FIG. 20

FIRST SORTING PROCESS — S101

↓

APPROXIMATION PROCESSING — S102

↓

ADJUSTMENT PROCESSING
OF SORTING CONDITION — S103

↓

SECOND SORTING PROCESS — S104

## FIG. 21

# FIG. 22

# FIG. 23

# FIG. 24

| | |
|---|---|
| SET GATE | S21 |
| SELECT SORTING MODE | S22 |
| SORT | S23 |
| STORE OPERATION CONTROL DATA | S24 |

# FIG. 25

CONFIRM GATE — S31

PERFORM CALIBRATION — S32

PRE-SORT — S33

OUTPUT PRE-SORTING RESULT — S34

SORT — S35

OUTPUT SORTING RESULT — S36

## FIG. 26A

500

| Measurement Data |
| --- |

Recovery: 30%

Efficiency: 97%

EPS: 15,000 eps

Flow Rate: 30 µL/min

| Reset | | Edit |

501

| START |

## FIG. 26B

502

500

| Measurement Data |
| --- |

Recovery: 30%

Efficiency: 97%

EPS: 15,000 eps

Flow Rate: 30 µL/min

| Reset | | Edit |

| Edit |
| --- |

Flow Rate: [    ] µL/min

| Cancel | | OK |

START

## FIG. 26C

500

502

Measurement Data

Recovery: 30%

Efficiency: 97%

EPS: 15,000 eps

Flow Rate: 30 μL/min

Reset    Edit

Edit

Flow Rate:    40    μL/min

Cancel    OK

START

503

## FIG. 26D

500

Measurement Data

Recovery: 30%

Efficiency: 97%

EPS: 15,000 eps

Flow Rate: 30 μL/min    →    40 μL/min

Reset    Edit

START

504

505

# FIG. 27

## INTERNATIONAL SEARCH REPORT

| International application No. |
| --- |
| **PCT/JP2022/038559** |

### A.  CLASSIFICATION OF SUBJECT MATTER

***G01N 15/14***(2006.01)i; ***G01N 37/00***(2006.01)i
FI:   G01N15/14 B; G01N37/00 101

According to International Patent Classification (IPC) or to both national classification and IPC

### B.   FIELDS SEARCHED

Minimum documentation searched (classification system followed by classification symbols)

G01N15/14; G01N37/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
| --- | --- | --- |
| X | JP 2021-76455 A (SONY CORPORATION) 20 May 2021 (2021-05-20) | 1-9, 21 |
|  | paragraphs [0053]-[0072], [0078]-[0079], fig. 5-8 | |
| Y | paragraphs [0053]-[0072], [0078]-[0079], fig. 5-8 | 16-20 |
| A | paragraphs [0053]-[0072], [0078]-[0079], fig. 5, -8 | 10-15 |
| Y | JP 2020-56593 A (SYSMEX CORPORATION) 09 April 2020 (2020-04-09) | 16-20 |
|  | paragraphs [0110]-[0114], [0134], fig. 6, 17 | |
| A | US 2014/0309782 A1 (CYTONOME/ST, LLC) 16 October 2014 (2014-10-16) | 1-21 |
|  | entire text, all drawings | |

☐ Further documents are listed in the continuation of Box C.     ☑ See patent family annex.

| | |
| --- | --- |
| *    Special categories of cited documents: | "T"   later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"   document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"   document member of the same patent family |

| Date of the actual completion of the international search | Date of mailing of the international search report |
| --- | --- |
| **15 November 2022** | **29 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/038559**

| Patent document cited in search report | | | Publication date (day/month/year) | Patent family member(s) | | | Publication date (day/month/year) |
|---|---|---|---|---|---|---|---|
| JP | 2021-76455 | A | 20 May 2021 | EP | 4024027 | A1 | |
| | | | | paragraphs [0058]-[0078], [0084]-[0085], fig. 5-8 | | | |
| JP | 2020-56593 | A | 09 April 2020 | US | 2020/0103333 | A1 | |
| | | | | paragraphs [0165]-[0170], [0194], fig. 6, 17 | | | |
| | | | | EP | 3629002 | A1 | |
| | | | | CN | 110967512 | A | |
| US | 2014/0309782 | A1 | 16 October 2014 | CN | 105431725 | A | |
| | | | | entire text, all drawings | | | |
| | | | | WO | 2014/152039 | A2 | |

Form PCT/ISA/210 (patent family annex) (January 2015)

**REFERENCES CITED IN THE DESCRIPTION**

**Patent documents cited in the description**

- WO 2021090573 A
- JP 2011232259 A
- JP 2020076736 A